# EUROPÄISCHE PATENTSCHRIFT

(11) **EP 4 138 721 B1**
(45) Veröffentlichungstag und Bekanntmachung des Hinweises auf die Patenterteilung: **01.10.2025**
(21) Anmeldenummer: 21722753.7
(22) Anmeldetag: 31.03.2021
(51) Int. Cl.: A61C 8/00, A61C 13/265

(54) **DENTALES VERANKERUNGSSYSTEM ZUR VERANKERUNG EINES TRÄGERELEMENTS AN EINEM VERANKERUNGSELEMENT**
DENTAL ANCHORING SYSTEM FOR ANCHORING A CARRIER ELEMENT TO AN ANCHORING ELEMENT
SYSTÈME D'ANCRAGE DENTAIRE POUR ANCRER UN ÉLÉMENT DE SUPPORT À UN ÉLÉMENT D'ANCRAGE

(30) Priorität: 24.04.2020 DE 102020002480
(43) Veröffentlichungstag der Anmeldung: 01.03.2023
(73) Patentinhaber: Scherer, Johannes, 86438 Kissing (DE)
(72) Erfinder: Scherer, Johannes, 86438 Kissing (DE)
(74) Vertreter: Wiedemann, Markus
(86) Internationale Anmeldenummer: PCT/DE2021/000058
(87) Internationale Veröffentlichungsnummer: WO 2021/213562

(56) Entgegenhaltungen:
- WO-A1-2008/040134
- WO-A1-2018/021955
- DE-A1- 102013 114 779
- DE-A1- 102019 203 222
- US-B2- 9 827 074

## Beschreibung

Die vorliegende Erfindung betrifft dentale Verankerungssysteme gemäß Anspruch 1 und gemäß Anspruch 16.

Ein dentales Verankerungssystem ist beispielsweise aus DE 10 2015 100 117 B4 bekannt. Dort wird ein Abutment mit einem Innenkonus offenbart, welcher auf einen Außenkonus eines Implantats aufgesetzt und dort mittels einer Befestigungsschraube gehalten ist. Am Abutment ist dann die Zahnprothese befestigt. Die Schraubverbindung kann allerdings nur durch einen Zahnarzt gelöst werden, um das Abutment abzunehmen. Jedoch werden dentale Verankerungssysteme mit verschraubten Komponenten von Patienten oft nachgefragt, weil der Patient dann das Gefühl von eigenen festsitzenden Zähnen hat. DE 10 2016 118 668 A1 offenbart ein weiteres dentales Verankerungssystem mit einer lösbaren formschlüssigen Rastverbindung zwischen einer die Zahnprothetik tragenden Kappe und einem Implantat. Diese lösbare Rastverbindung ermöglicht zwar ein Entfernen der Kappe mit der Zahnprothetik durch den Patienten oder den Zahnarzt, so dass dann auf einfache Weise eine Reinigung der Kappe samt Zahnprothetik und der frei liegenden Flächen des Implantats möglich ist, jedoch ist dem Patienten dadurch nicht das Gefühl einer festsitzenden Zahnprothetik vermittelbar, wie dies etwa bei dem oben genannten Stand der Technik der Fall ist. Weitere dentale Verankerungssystem sind aus US 9 827 074 B2 sowie aus DE 10 2019 203 222 A1; DE 10 2013 114 779 A1, DE 10 2019 203 222 A1, WO 2008/040134 A1 und WO 2018/021955 A1 bekannt.

Die Aufgabe der Erfindung besteht darin, dentale Verankerungssysteme mit einer hohen Flexibilität und einfachen Montage zur Verfügung zu stellen.

Diese Aufgabe wird durch die Merkmale der Ansprüche 1 und 16 gelöst.

### OFFENBARUNG DER ERFINDUNG

Die Erfindung basiert auf in einem ersten Aspekt auf dem Gedanken, dem Patienten (zunächst) ein dentales Verankerungssystem in einer ersten Verankerungsart zur Verfügung zu stellen, bei welcher das Trägerelement mit Hilfe einer Befestigungsschraube an dem Verankerungselement befestigt ist und dem Patienten dadurch das Gefühl festsitzender Zähne vermittelt.

Wenn dann der Patient mit steigendem Alter oder aufgrund seiner Lebenssituation (Heimaufenthalt) nicht mehr in der Lage ist, für eine Reinigung seiner Zähne zu sorgen, oder wenn eine Reparatur notwendig wird, dann kann dentale Verankerungssystem von der ersten Verankerungsart in die zweite Verankerungsart ohne großen Aufwand umgebaut werden.

In der zweiten Verankerungsart des dentalen Verankerungssystems ermöglicht die Druckknopf- oder Ratsverbindung ein leichtes Lösen des Trägerelements vom Verankerungselement beispielsweise durch den Patienten selbst oder durch Pflegepersonal, ohne dass hierzu ein Zahnarzt hinzugezogen werden müsste. Denn kommt der Patient in ein höheres Alter und wird pflegebedürftig, können durch Verschraubungen miteinander verbundene Komponenten von Dentalimplantaten durch den Patienten oder durch Pflegepersonal nicht gelöst und dann gereinigt werden, was zu einem Verlust der Dentalimplantate führen kann.

Die Erfindung hat daher die oben dargestellte Langfristproblematik erkannt und bei dem erfindungsgemäßen dentalen Verankerungssystem berücksichtigt. Die Erfindung stellt ein dentales Verankerungssystem zur Verfügung, welches in seiner ersten Verankerungsart dem Patienten ein Gefühl festsitzender Zähne vermittelt. Andererseits kann das dentale Verankerungssystem, wenn es von der ersten Verankerungsart in die zweite Verankerungsart umgebaut worden ist, ohne großen Aufwand vom Patienten selbst oder von Pflegepersonal demontiert und gereinigt werden. Weiterhin ist es dann auch vom Zahnarzt leichter instandsetzbar.

Der erste Aspekt der Erfindung schlägt daher ein dentales Verankerungssystem zur Verankerung eines Trägerelements an einem Verankerungselement vor, mit wenigstens dem Trägerelement, dem Verankerungselement, und einer Befestigungsschraube, wobei
a) das Verankerungselement einen Aufnahmeabschnitt zur Aufnahme des Trägerelements und eine Gewindebohrung aufweist, wobei
b) das Trägerelement zur direkten oder indirekten Befestigung an einem dentalen Aufbauelement, insbesondere an einer Dentalprothetik ausgebildet ist, und einen Lagerabschnitt zur Lagerung an dem Aufnahmeabschnitt des Verankerungselements ausbildet, wobei
c) das Trägerelement an dem Verankerungselement in einer ersten Verankerungsart unter Verwendung der Befestigungsschraube dadurch befestigbar ist, dass das Trägerelement mit seinem Lagerabschnitt an dem Aufnahmeabschnitt des Verankerungselements aufgenommen und die Befestigungsschraube in die Gewindebohrung des Verankerungselements eingeschraubt wird, wobei
d) das Trägerelement an dem Verankerungselement wahlweise auch mittels einer zweiten Verankerungsart ohne Verwendung der Befestigungsschraube dadurch lösbar befestigbar ist, dass
e) eine zerstörungsfrei lösbare und formschlüssige Verbindung zwischen einem Außenteil und einem Innenteil vorgesehen wird, bei welcher das Innenteil in das Außenteil nach Art einer Druckknopf- oder Rastverbindung unter elastischer Verformung des Innenteils und/oder des Außenteils einrastbar ist, wobei
f) das Innenteil an dem Verankerungselement und das Außenteil an dem Trägerelement vorgesehen wird, und das Außenteil ein separates Teil darstellt, welches an dem Trägerelement befestigbar ist, wobei
g) das Trägerelement mit seinem Lagerabschnitt an dem Aufnahmeabschnitt des Verankerungselements unter zerstörungsfrei formschlüssigem Einrasten des Innenteils in das Außenteil aufgenommen und dadurch das Trägerelement an dem Verankerungselement lösbar gehalten wird, wobei
h) zum Lösen der zweiten Verankerungsart das Trägerelement von dem Verankerungselement unter Entrasten des Innenteils aus dem Außenteil abziehbar ist, wobei
i) das dentale Verankerungssystem von der zweiten Verankerungsart auf die erste Verankerungsart dadurch umrüstbar ist, dass das Trägerelement von dem Verankerungselement abgezogen, und dann das Trägerelement mit seinem Lagerabschnitt an dem Aufnahmeabschnitt des Verankerungselements aufgenommen und die Befestigungsschraube in die Gewindebohrung des Verankerungselements eingeschraubt wird, und wobei
j) das dentale Verankerungssystem von der ersten Verankerungsart auf die zweite Verankerungsart dadurch umrüstbar ist, dass die Befestigungsschraube gelöst, das Trägerelement von dem Verankerungselement abgezogen und dann das Innenteil zerstörungsfrei in das Außenteil eingerastet wird, und dann das Trägerelement mit dem Verankerungselement zusammengeführt wird, und wobei
k) das Außenteil wenigstens teilweise sphärisch ausgebildet und das Innenteil wenigstens teilweise derart komplementär sphärisch ausgebildet ist, dass bei in das Außenteil eingerastetem Innenteil das Außenteil und das Innenteil alleine relativ zueinander in eine Vielzahl von Relativschwenklagen verschwenkbar sind.

Direkte oder indirekte Befestigung des dentalen Aufbauelements an dem Trägerelement meint, dass das dentale Aufbauelement, beispielsweise eine Zahnprothetik direkt mit dem Trägerelement verbunden oder verbindbar ist, oder dass zwischen dem dentalen Aufbauelement und dem Trägerelement noch wenigstens ein weiteres Element des dentalen Verankerungssystems angeordnet sein kann.

Gemäß dem ersten Aspekt der Erfindung ist daher vorgesehen, dass das Trägerelement an dem Verankerungselement wahlweise auch mittels einer vorgesehenen zweiten Verankerungsart ohne Verwendung der Befestigungsschraube dadurch befestigbar ist, dass eine (zerstörungsfrei) lösbare formschlüssige Verbindung zwischen einem Außenteil und einem Innenteil vorgesehen wird, bei welcher das Innenteil in das Außenteil nach Art einer Druckknopf- oder Rastverbindung unter elastischer Verformung des Innenteils und/oder des Außenteils insbesondere verdrehungsfrei einrastbar ist, und das Innenteil an dem Verankerungselement vorgesehen und insbesondere gehalten oder ausgebildet und das Außenteil an dem Trägerelement vorgesehen und insbesondere gehalten oder ausgebildet wird (ist), und das Trägerelement mit seinem Lagerabschnitt an dem Aufnahmeabschnitt des Verankerungselements unter (zerstörungsfrei) formschlüssigem Einrasten des Innenteils in das Außenteil aufgenommen und dadurch das Trägerelement an dem Verankerungselement lösbar gehalten wird, wobei zum Lösen der zweiten Verankerungsart (lediglich) das Trägerelement von dem Verankerungselement unter (zerstörungsfreiem) Entrasten des Innenteils aus dem Außenteil abziehbar ist (abgezogen wird).

Mit anderen Worten wird bei dem dentalen Verankerungsystem gemäß dem ersten Aspekt der Erfindung neben der ersten Verankerungsart zusätzlich und von vorneherein eine zweite Verankerungsart ohne Verwendung der Befestigungsschraube vorgesehen, wobei wahlweise ein Umbau des dentalen Verankerungsystems von der ersten Verankerungsart auf die zweite Verankerungsart und von der zweiten Verankerungsart auf die erste Verankerungsart möglich und vorgesehen ist, ohne dass die Geometrie/Form der für die erste Verankerungsart und für die zweite Verankerungsart verwendeten Bauteile, Baugruppen oder Komponenten (Verankerungselement, Trägerelement) verändert werden müsste.

"Gehalten" meint, dass das Innenteil und/oder das Außenteil ein separates Teil/separate Teile in Bezug zu dem Verankerungselement und dem Trägerelement darstellt (darstellen) und dann an dem Verankerungselement und dem Trägerelement angeordnet und gehalten wird (werden). "Ausgebildet" meint, dass das Innenteil ein integrales Teil des Trägerelements darstellt.

Dies kann insbesondere auch bereits von Anfang an der Fall sein, d.h. bereits im Zustand des dentalen Verankerungssystems in der ersten Verbindungsart.

"Insbesondere verdrehungsfrei" meint, dass beim Einrasten und Ausrasten der Druckknopf- oder Rastverbindung keine Relativdrehung zwischen dem Trägerelement und dem Verankerungselement stattfindet.

Unter einer "lösbaren und formschlüssigen Verbindung zwischen dem Außenteil und dem Innenteil nach Art einer Druckknopf- oder Rastverbindung" soll jegliche bevorzugt jeweils zerstörungsfrei in Formschluss und außer Formschluss bringbare Verbindung zwischen einem Außenteil und einem Innenteil verstanden werden. Dazu zählen neben Druckknopfverbindungen auch insbesondere Rastverbindungen, bei welchen elastische Rastelemente wie beispielsweise elastische Rastschenkel oder Rastzungen in Ausnehmungen oder Aussparungen des jeweiligen Partners (Trägerelement oder Verankerungselement) der Rastverbindung einrasten oder zum Eingriff der elastischen Rastelemente vorgesehene Geometrien des jeweiligen Partners (Trägerelement oder Verankerungselement) der Rastverbindung formschlüssig hintergreifen, wie beispielsweise Rastkanten.

Auch sind die Begriffe Außenteil und Innenteil nicht in einem engeren Sinne so zu verstehen, dass das Innenteil etwa komplett in dem Außenteil aufgenommen werden müsste, wenn die Druckknopf- oder Rastverbindung zustandegekommen ist. Vielmehr sind die Begriffe Außenteil und Innenteil in einem weiteren Sinne zu verstehen, dergestalt, dass auch lediglich nur Komponenten oder Abschnitte des Innenteils innerhalb des Außenteils angeordnet sind und/oder lediglich nur Komponenten oder Abschnitte des Außenteils das Innenteil umgreifen oder umschließen, wenn die Druckknopf- oder Rastverbindung zustandegekommen ist.

Dabei kann das Außenteil gegenüber dem Querschnitt des Innenteils einen hinterschnittenen Querschnitt dergestalt aufweisen, dass durch eine äußere Krafteinwirkung das Innenteil in das Außenteil unter elastischer Verformung des Innnenteils oder des Außenteils einsteck- oder oder einrastbar ist. Folglich kann das Innenteil steifer als das Außenteil oder das Außenteil steifer als das Innenteil ausgebildet sein. Bevorzugt ist dabei eine Materialpaarungen in Form von (nachgiebigem) Kunststoff für das Außenteil und demgegenüber steiferes Metall für das Außenteil vorgesehen. Möglich sind aber beliebige Formen und Materialpaarungen, durch welche eine lösbare formschlüssige Rastverbindung zwischen einem Innenteil und einem Außenteil realisierbar ist. Beispielsweise kann das Außenteil durch ein mit wenigstens einem Schlitz versehene Hülse gebildet werden, um eine elastische Aufweitung des Außenteils zu ermöglichen, wenn das Innenteil in das Außenteil eingeführt wird.

Daher ist das dentale Verankerungssystem von der ersten Verankerungsart auf die zweite Verankerungsart dadurch umrüstbar, dass die Befestigungsschraube gelöst, das Trägerelement von dem Verankerungselement abgezogen und das Innenteil an dem Verankerungselement angeordnet wird, falls es dort nicht bereits angeordnet oder ausgebildet ist, und dann das Innenteil zerstörungsfrei in das Außenteil eingerastet wird. Dann wird das Trägerelement mit dem Verankerungselement zusammengeführt und bevorzugt dabei das Trägerelement mit dem Außenteil verbunden. Das Trägerelement kann aber alternativ auch von Anfang an, d.h. bereits im Zustand des dentalen Verankerungssystems in der ersten Verankerungsart mit dem Außenteil verbunden sein.

Weiterhin ist dann das dentale Verankerungssystem von der zweiten Verankerungsart auf die erste Verankerungsart insbesondere dadurch umrüstbar, dass das Trägerelement von dem Verankerungselement abgezogen, optional das Innenteil und/oder das Außenteil entfernt, und dann das Trägerelement mit dem Verankerungselements zusammengeführt und die Befestigungsschraube in die Gewindebohrung des Verankerungselements eingeschraubt wird. Dies ist möglich, da ja in dem Verankerungselement weiterhin die Gewindebohrung vorhanden ist.

Der erste Aspekt der Erfindung kombiniert daher das oben beschriebene dentale Verankerungssysteme mit der ersten Verankerungsart (fest verschraubt) und das oben beschriebene dentale Verankerungssysteme mit der zweiten Verankerungsart (lösbare Druckknopf- oder Rastverbindung) vorteilhaft miteinander. Insbesondere erlaubt der erste Aspekt der Erfindung, bei Patienten bereits vorhandene dentale Verankerungssysteme mit der ersten Verankerungsart (fest verschraubt) auf dentale Verankerungssysteme mit der zweiten Verankerungsart (lösbare Druckknopf- oder Rastverbindung) umzurüsten, ohne dass dabei eine Veränderung an dem Verankerungselement oder an dem Trägerelement notwendig sind. Auch kann die von dem Trägerelement direkt oder indirekt getragene Zahnprothetik unverändert beibehalten werden.

Es kann vorgesehen sein, dass das Trägerelement mit seiner Innenoberfläche einen apikal offenen Hohlraum ausbildet, welcher durch den Schaft der Befestigungsschraube bei der ersten Verankerungsart wenigstens teilweise (insbesondere koaxial) durchragt wird. Dieser Hohlraum kann ausgeführt sein, dass insbesondere nach einem Entfernen der Befestigungsschraube eine Anordnung des Innenteils und/oder des Außenteils in dem Hohlraum möglich ist, oder dass das Innenteil und/oder das Außenteil in dem Hohlraum bereits von Anfang an angeordnet und dabei die wenigstens teilweise Durchführung des Schafts der Befestigungschraube durch den Hohlraum möglich ist.

Die Umrüstung von der ersten Verankerungsart auf die zweite Verankerungsart ist dann bei einer solchen Ausführung auf einfache Weise möglich, weil der Hohlraum des Trägerelements von Anfang an so ausgebildet worden ist, dass nach einem Entfernen der Befestigungsschraube eine nachträgliche Anordnung des Innenteils und/oder des Außenteils in dem Hohlraum möglich ist, oder weil das Innenteil oder das Außenteil in dem Hohlraum bereits von Anfang an, d.h. bereits im Zustand des dentalen Verankerungssystems in der ersten Verankerungsart angeordnet war.

Mit dem ersten Aspekt der Erfindung ist es daher möglich, zunächst ein dentales Verankerungssysteme mit der ersten Verankerungsart (fest verschraubt) anzufertigen, die aber jederzeit durch Hinzufügen von Einzelteilen wie dem Innenteil und/oder dem Außenteil und durch ein Entfernen der Befestigungsschraube eine Umrüstung auf ein dentales Verankerungssysteme mit der zweiten Verankerungsart (zerstörungsfrei lösbare Druckknopf- oder Rastverbindung) erlaubt, ohne dass dabei Veränderungen an dem Verankerungselement oder an dem Trägerelement notwendig sind.

Gemäß einer bevorzugten Ausführungsform kann das Innenteil an einem koronalen Ende einer (von der Befestigungsschraube verschiedenen) Schraube ausgebildet sein, welche bei der zweiten Verankerungsart anstelle der Befestigungsschraube mit ihrem apikalen Ende in die Gewindebohrung des Verankerungselements einschraubbar ist. Dann wird die bereits vorhandene Gewindebohrung des Verankerungselements, die ohne eine Verwendung der Befestigungsschraube bei der zweiten Verankerungsart an sich nutzlos wäre, als Lagerung für die Schraube verwendet, die dann das Innenteil trägt oder an welcher das Innenteil angeordnet oder einstückig ausgebildet ist. Das Innenteil bildet dann beispielsweise eine Art "Schraubenkopf" der Schraube aus. Für eine Umrüstung von der ersten Verankerungsart auf die zweite Verankerungsart wird dann die Befestigungsschraube aus der Gewindebohrung entfernt und durch die Schraube mit dem Innenteil am koronalen Ende ersetzt, die dann ebenfalls in die Gewindebohrung eingeschraubt wird.

Das Innenteil kann ein separates Teile darstellen, welches an dem Verankerungselement befestigbar ist. Auch können das Innenteil und/oder das Außenteil rotationssymmetrisch ausgebildet sein. Auch kann das Innenteil an dem Verankerungselement integral ausgebildet sein, insbesondere im Bereich des Aufnahmeabschnitts. Auch kann das Innenteil an dem Verankerungselement integral ausgebildet sein. Dann kann auf ein separates Innenteil verzichtet werden.

Das Innenteil kann insbesondere eine äußere Kugelschicht- oder Kugelsegmentfläche und das Außenteil eine zur äußeren Kugelschicht- oder Kugelsegmentfläche komplementäre innere Kugelschicht- oder Kugelsegmentfläche aufweisen. Auch kann das Außenteil beispielsweise durch eine geschlitzte Hülse gebildet werden, deren Innenoberfläche dann einen sphärische Flächenabschnitt aufweist.

Gemäß einer Weiterbildung kann eine definierte Relativschwenklage der Vielzahl von Relativschwenklagen vorgesehen sein, in welcher die Richtung einer Mittelachse des Außenteils und/oder die Richtung einer Mittelachse des Innenteils einer Montage- und/oder Demontagerichtung des Trägerelements in Bezug auf das Verankerungselement entspricht.

In der definierten Relativschwenklage können die Mittelachse des Außenteils und die Mittelachse des Innenteils koaxial oder auch nicht koaxial sein.

Diese Ausführungsform trägt dem Umstand Rechnung, dass wenn das dentale Verankerungssystem für mehrere Zähne mit Prothetik samt Implantate vorgesehen wird, die Implantat-Achsen bei nicht parallel gesetzten Implantaten in verschiedene Richtungen weisen und es dann von Vorteil ist, wenn die Mittelachse des Außenteils und/oder des Innenteils gegenüber dem Verankerungselement und/oder dem Trägerelement winkelig ausrichtbar ist (sind), so dass bei der Montage/Demontage keine Verzwängungen oder Schäden am Innenteil oder Außenteil entstehen.

Dabei kann ein Ausrichtelement vorgesehen sein und das Außenteil und/oder das Innenteil einen Eingriffsabschnitt zum Eingriff des Ausrichtelements derart umfassen, dass durch einen Eingriff des Ausrichtelements am Eingriffsabschnitt und durch ein nachfolgendes Bewegen des Ausrichtelements das Außenteil und das Innenteil in die definierte Relativschwenklage bringbar sind.

Das Ausrichtelement kann dabei insbesondere stabförmig ausgebildet sein und an seinem einen Ende in den beispielsweise als Öffnung ausgebildeten Eingriffsabschnitt derart eingreifen, dass durch eine Bewegung des Ausrichtelements ein Drehmoment auf das Innenteil oder das Außenteil ausgeübt und dieses dann gegenüber dem Trägerelement oder dem Verankerungselement verdreht wird.

Auch können das Außenteil und das Innenteil zusammen ein Doppelgelenk oder Komponenten eines solchen Doppelgelenks derart ausbilden, dass
a) mit Hilfe eines ersten Gelenks des Doppelgelenks ein relatives Verschwenken des Außenteils und des Innenteils um eine erste Gelenkachse in einer ersten Schwenkebene möglich ist, und
b) mit Hilfe eines zweiten Gelenks des Doppelgelenks ein relatives Verschwenken des Außenteils und des Innenteils um eine zweite Gelenkachse und in einer zweiten Schwenkebene möglich ist.

Dabei kann die erste Gelenkachse senkrecht zur zweiten Gelenkachse sein, oder auch die erste Schwenkebene senkrecht zur zweiten Schwenkebene sein. Insbesondere kann auch in dem ersten Gelenk und/oder in dem zweiten Gelenk lediglich ein Drehfreiheitsgrad um die erste Gelenkachse oder um die zweite Gelenkachse vorgesehen sein.

Zur Realisierung dieser Ausführung kann das Außenteil zwei von einem Grundkörper parallel wegragende Wangen mit jeweils inneren Kugelschicht- oder Kugelsegmentflächen aufweisen, welche diametral gegenüber liegende äußere Kugelschicht- oder Kugelsegmentflächen am Innenteil derart kontaktierend umgreifen, dass die erste Schwenkebene parallel zu den beiden Wangen und die erste Gelenkachse senkrecht zu den beiden Wangen verläuft.

Bedingt durch den gegenseitigen Eingriff der inneren Kugelschicht- oder Kugelsegmentflächen an den beiden Wangen und der äußeren Kugelschicht- oder Kugelsegmentflächen am Innenteil sind in vorteilhafter Weise unabhängig von der Schwenklage der Wangen bzw. des Außenteils in Bezug zu dem Innenteil stets die gleichen Haltekräfte der formschlüssigen Verbindung vorhanden.

Auch kann die zweite Gelenkachse koaxial in Bezug auf die Mittelachse des Innenteils oder in Bezug zu einer Mittelachse des Verankerungselements sein.

Der Vorteil dieser Ausführungsform liegt dann darin, zum Herstellen der definierten Relativschwenklage zwischen dem Außenteil und dem Innenteil und damit der gewünschten Montage- und/oder Demontagerichtung zwischen dem Trägerelement und dem Verankerungselement lediglich
a) das Außenteil mit dem Innenteil formschlüssig verrastet, und dann
b) das Außenteil und das Innenteil um die zweite Gelenkachse und in der zweiten Schwenkebene um einen definierten Schwenkwinkel β₀ so gegeneinander ausgerichtet werden, dass die erste Schwenkebene parallel zur gewünschten oder vorgegebenen Montage- und/oder Demontagerichtung ist (z.B. durch Verdrehen des Außenteils um die Mittelachse des Innenteils) und innerhalb der ersten Schwenkebene und um die erste Gelenkachse ein definierter Schwenkwinkel α₀ zwischen der Mittelachse des Außenteils und der Mittelachse des Innenteils eingestellt wird.

Dann muss (müssen) lediglich noch beispielsweise das Außenteil und/oder das Innenteil an oder in dem Trägerelement oder an oder in dem Verankerungselement befestigt werden. Die oben beschriebene Ausführung gewährleistet daher eine sehr einfache Montage/Demontage zwischen dem Trägerelement und dem Verankerungselement in einer gewünschten Montage-/Demontagerichtung.

Wenn dann beispielsweise das Außenteil in oder an dem Trägerelement oder an dem Verankerungselement in der definierten Relativschwenklage befestigt ist, so bleibt die hierdurch definierte relative Ausrichtung des Außenteils gegenüber dem Innenteil bei einer Montage/Demontage bestehen.

Insbesondere kann das Verankerungselement ein Abutment und/oder ein Implantat umfassen. Auch kann das Trägerelement durch eine Trägerhülse für die Zahnprothetik gebildet werden. Dabei ist aber unerheblich, in welcher Ebene die Trennung zwischen dem Verankerungselement und dem abnehmbaren Trägerelement des dentalen Verankerungssystems stattfindet. Möglich ist die Trennung beispielsweise zwischen dem Abutment als Verankerungselement und beispielsweise einer Trägerhülse für die Zahnprothetik als Trägerelement, und/oder zwischen einem Implantat als Verankerungselement und einem Abutment als Trägerelement.

Unter einem Abutment wird allgemein das Verbindungsteil (Mesostruktur) zwischen dem Implantat und der prothetischen Versorgung, d.h. der sichtbaren Zahnkrone bezeichnet. Das Abutment kann dabei als separates Teil beispielsweise mit Hilfe einer Schraube an dem Implantat befestigt sein, oder das Abutment ist mit dem Implantat integral ausgeführt.

Bei dem Implantat handelt es sich um den tragenden Pfosten des Dental-Implantatsystems, welcher beispielsweise ein Außengewinde aufweist, mit welchem das Implantat in den Kieferknochen eingeschraubt wird. Das Implantat wird daher mit einem Insertionsabschnitt in den Kieferknochen eingesetzt, wobei ein koronales Ende aus dem Kieferknochen herausragt, an welchem dann das Abutment mit Hilfe der Schraube befestigt wird oder an welchem bereits das Abutment ausgebildet ist.

Besonders bevorzugt werden der Aufnahmeabschnitt des Verankerungselements und der Lagerabschnitt des Trägerelements durch komplementär ausgebildete Konusflächen gebildet. Dies sorgt für eine Zentrierung des Trägerelements auf dem Verankerungselement. Die komplementär ausgebildeten Konusflächen sind dabei bevorzugt axial derart angeordnet, dass sie sich miteinander im Eingriff befinden (die Konusflächen kontaktieren sich), und/oder dass das Trägerelement und das Verankerungselement an einander zugeordneten Axialanschlägen am Trägerelement und am Verankeruingselement anschlagen, wenn parallel auch die lösbare formschlüssige Verbindung zwischen dem Außenteil und dem Innenteil zustande gekommen ist.

Vom Verankerungselement aus gesehen verjüngt sich der Konus des Verankerungselements bevorzugt in koronale Richtung, so dass auch ein in Bezug zur Mittelachse des Verankerungselements winkeliges oder schräges Abziehen des Trägerelements von dem Verankerungselement in der Abziehrichtung möglich ist, welche beispielsweise durch das oben beschriebene Ausrichten des Innenteils oder des Außenteils mittels des Ausrichtelements definiert worden ist.

Weiterhin kann das Trägerelement eine zentrale Durchgangsöffnung mit einem Öffnungsrand zum Kontern eines Schraubenkopfes der Befestigungsschraube und zur Durchführung eines Schafts der Befestigungsschraube aufweisen.

Ein zweiter Aspekt der Erfindung stellt ein dentales Verankerungssystem zur Verankerung eines Trägerelements an einem Verankerungselement zur Verfügung, mit wenigstens dem Trägerelement und dem Verankerungselement, wobei
a) das Verankerungselement einen Aufnahmeabschnitt zur Aufnahme des Trägerelements und eine Gewindebohrung aufweist,
b) das Trägerelement zur direkten oder indirekten Befestigung an einem dentalen Aufbauelement, insbesondere an einer Dentalprothetik ausgebildet ist, und einen Lagerabschnitt zur Lagerung an dem Aufnahmeabschnitt des Verankerungselements ausbildet,
c) das Trägerelement an dem Verankerungselement in einer ersten Verankerungsart unter Verwendung einer Befestigungsschraube dadurch befestigbar ist, dass das Trägerelement mit seinem Lagerabschnitt an dem Aufnahmeabschnitt des Verankerungselements aufgenommen und die Befestigungsschraube in die Gewindebohrung des Verankerungselements eingeschraubt werden kann, wobei
d) das Trägerelement an dem Verankerungselement wahlweise auch mittels einer zweiten Verankerungsart ohne Verwendung der Befestigungsschraube dadurch lösbar befestigbar ist, dass
e) eine zerstörungsfrei lösbare und formschlüssige Verbindung zwischen einem Außenteil und einem Innenteil vorgesehen wird, bei welcher das Innenteil in das Außenteil nach Art einer Druckknopf- oder Rastverbindung unter elastischer Verformung des Innenteils und/oder des Außenteils einrastbar ist, und
f1) das Außenteil an dem Verankerungselement und das Innenteil an dem Trägerelement vorgesehen wird, oder
f2) das Innenteil an dem Verankerungselement und das Außenteil an dem Trägerelement vorgesehen wird, und
g) das Trägerelement mit seinem Lagerabschnitt an dem Aufnahmeabschnitt des Verankerungselements unter zerstörungsfrei formschlüssigem Einrasten des Innenteils in das Außenteil aufgenommen und dadurch das Trägerelement an dem Verankerungselement lösbar gehalten wird, wobei
h) zum Lösen der zweiten Verankerungsart das Trägerelement von dem Verankerungselement unter Entrasten des Innenteils aus dem Außenteil abziehbar ist, wobei
i) das Außenteil wenigstens teilweise sphärisch ausgebildet und das Innenteil wenigstens teilweise derart komplementär sphärisch ausgebildet ist, dass bei in das Außenteil eingerastetem Innenteil das Außenteil und das Innenteil alleine relativ zueinander in eine Vielzahl von Relativschwenklagen verschwenkbar sind, und wobei
j) eine definierte Relativschwenklage der Vielzahl von Relativschwenklagen vorgesehen ist, in welcher die Richtung einer Mittelachse des Außenteils oder die Richtung einer Mittelachse des Innenteils einer Montage- und/oder Demontagerichtung des Trägerelements in Bezug auf das Verankerungselement entspricht und in welcher das Trägerelement und das Verankerungselement montiert und demontiert werden können, und wobei
k) das Außenteil und das Innenteil zusammen ein Doppelgelenk derart ausbilden, dass mit Hilfe eines ersten Gelenks des Doppelgelenks ein relatives Verschwenken des Außenteils und des Innenteils um eine erste Gelenkachse in einer ersten Schwenkebene möglich ist, und mit Hilfe eines zweiten Gelenks des Doppelgelenks ein relatives Verschwenken des Außenteils und des Innenteils um eine zweite Gelenkachse und in einer zweiten Schwenkebene möglich ist, und wobei
I) das Außenteil zwei von einem Grundkörper parallel wegragende Wangen mit jeweils inneren Kugelschicht- oder Kugelsegmentflächen aufweist, welche diametral gegenüber liegende äußere Kugelschicht- oder Kugelsegmentflächen am Innenteil derart kontaktierend umgreifen, dass die erste Schwenkebene parallel zu den beiden Wangen und die erste Gelenkachse senkrecht zu den beiden Wangen verläuft, und wobei
m) das Trägerelement eine zentrale Durchgangsöffnung mit einem Öffnungsrand zum Kontern eines Schraubenkopfes der Befestigungsschraube und zur Durchführung eines Schafts der Befestigungsschraube aufweist.

In der definierten Relativschwenklage können die Mittelachse des Außenteils und die Mittelachse des Innenteils koaxial oder auch nicht koaxial sein.

Dabei kann die erste Gelenkachse senkrecht zur zweiten Gelenkachse sein, oder auch die erste Schwenkebene senkrecht zur zweiten Schwenkebene sein. Insbesondere kann auch in dem ersten Gelenk lediglich ein erster Drehfreiheitsgrad um die erste Gelenkachse und/oder in dem zweiten Gelenk lediglich ein zweiter Drehfreiheitsgrad um die zweite Gelenkachse vorgesehen sein.

Bedingt durch den gegenseitigen Eingriff der inneren Kugelschicht- oder Kugelsegmentflächen an den beiden Wangen und der äußeren Kugelschicht- oder Kugelsegmentflächen am Innenteil und der sich daraus ergebenden Kreise als Ränder von sich kontaktierenden Flächenabschnitten der äußeren Kugelschicht- oder Kugelsegmentflächen und der inneren Kugelschicht- oder Kugelsegmentflächen sind in vorteilhafter Weise unabhängig von der Schwenklage der Wangen bzw. des Außenteils in Bezug zu dem Innenteil stets die gleichen Haltekräfte der formschlüssigen Verbindung vorhanden.

Auch kann die zweite Gelenkachse koaxial in Bezug auf die Mittelachse des Innenteils oder in Bezug zu einer Mittelachse des Verankerungselements sein.

Ein Vorteil liegt dann auch darin, zum Herstellen der definierten Relativschwenklage zwischen dem Außenteil und dem Innenteil und damit der gewünschten Montage- und/oder Demontagerichtung zwischen dem Trägerelement und dem Verankerungselement lediglich
a) das Außenteil mit dem Innenteil formschlüssig verrastet, und dann
b) das Außenteil und das Innenteil um die zweite Gelenkachse und in der zweiten Schwenkebene um einen definierten Schwenkwinkel β₀ so gegeneinander ausgerichtet werden, dass die erste Schwenkebene parallel zur gewünschten oder vorgegebenen Montage- und/oder Demontagerichtung ist (z.B. durch Verdrehen des Außenteils um die Mittelachse des Innenteils) und innerhalb der ersten Schwenkebene und um die erste Gelenkachse ein definierter Schwenkwinkel α₀ zwischen der Mittelachse des Außenteils und der Mittelachse des Innenteils eingestellt wird.

Dann muss (müssen) lediglich noch beispielsweise das Außenteil und/oder das Innenteil an oder in dem Trägerelement oder an oder in dem Verankerungselement befestigt werden. Die oben beschriebene Ausführung gewährleistet daher eine sehr flexible und einfache Montage/Demontage zwischen dem Trägerelement und dem Verankerungselement in einer gewünschten Montage-/Demontagerichtung.

Wenn dann beispielsweise das Außenteil in oder an dem Trägerelement oder an dem Verankerungselement in der definierten Relativschwenklage befestigt ist, so bleibt die hierdurch definierte relative Ausrichtung des Außenteils gegenüber dem Innenteil bei einer Montage/Demontage bestehen.

Dann kann ohne Verzwängungen das Trägerelement vom Verankerungselement demontiert bzw. das Trägerelement am Verankerungselement montiert werden, was eine Handhabung und Reinigung des Zahnersatzes durch den Patienten oder durch Pflegepersonal erleichtert.

### Zeichnung

Die Erfindung wird nachstehend anhand von Ausführungsbeispielen unter Bezugnahme auf die beigefügte Zeichnung näher beschrieben. Es zeigen:
- Fig. 1: eine Querschnittsansicht eines dentalen Verankerungssystem mit einer ersten Verankerungsart gemäß einer bevorzugten Ausführungsform der Erfindung im montierten Zustand eines Trägerelements an einem Verankerungselement mittels einer in eine Gewindebohrung des Verankerungselements eingeschraubten Befestigungsschraube;
- Fig. 2: eine Querschnittsansicht des dentalen Verankerungssystems von Fig. 1 während einer Demontage des Trägerelements von dem Verankerungselement durch Entfernen der Befestigungsschraube und Abziehen des Trägerelements von dem Verankerungselement;
- Fig. 3: eine Querschnittsansicht des dentalen Verankerungssystems von Fig. 1, bei welchem anstatt der Befestigungsschraube eine Schraube in die Gewindebohrung des Verankerungselements eingeschraubt wurde, an welcher ein Innenteil einer lösbaren formschlüssigen Verbindung zwischen einem Außenteil und dem Innenteil ausgebildet ist;
- Fig. 4: eine Querschnittsansicht des dentalen Verankerungssystems von Fig. 1, bei welchem das Außenteil der lösbaren formschlüssigen Verbindung auf das Innenteil aufgesetzt und ausgerichtet worden ist;
- Fig. 5: eine Querschnittsansicht des dentalen Verankerungssystems von Fig. 1, bei welchem das Trägerelement auf das Außenteil der lösbaren formschlüssigen Verbindung aufgesetzt worden ist, wodurch eine zweite Verankerungsart des dentalen Verankerungssystems realisiert wird;
- Fig. 6: eine Querschnittsansicht eines dentalen Verankerungssystem gemäß einer weiteren Ausführungsform der Erfindung, bei welcher bei der zweiten Verankerungsart das Innenteil der lösbaren formschlüssigen Verbindung bereits an dem Verankerungselement integral angeformt ist;
- Fig. 7: eine Querschnittsansicht des dentalen Verankerungssystems von Fig. 6, mit auf dem Innenteil montiertem Außenteil und Trägerelement;
- Fig. 8: eine Querschnittsansicht eines dentalen Verankerungssystems in der zweiten Verankerungsart gemäß einer weiteren Ausführungsform der Erfindung;
- Fig. 9: eine Querschnittsansicht entlang der Linie B-B des dentalen Verankerungssystems von Fig. 8;
- Fig. 10: eine gegenüber der Querschnittsansicht von Fig. 9 um 90 Grad verdrehte Querschnittsansicht des dentalen Verankerungssystems von Fig. 8;
- Fig. 11: eine Querschnittsansicht entlang der Linie C-C des dentalen Verankerungssystems von Fig. 10;
- Fig. 12: eine isometrische Ansicht des dentalen Verankerungssystems von Fig. 8 bis Fig. 11.

### Beschreibung der Ausführungsbeispiele

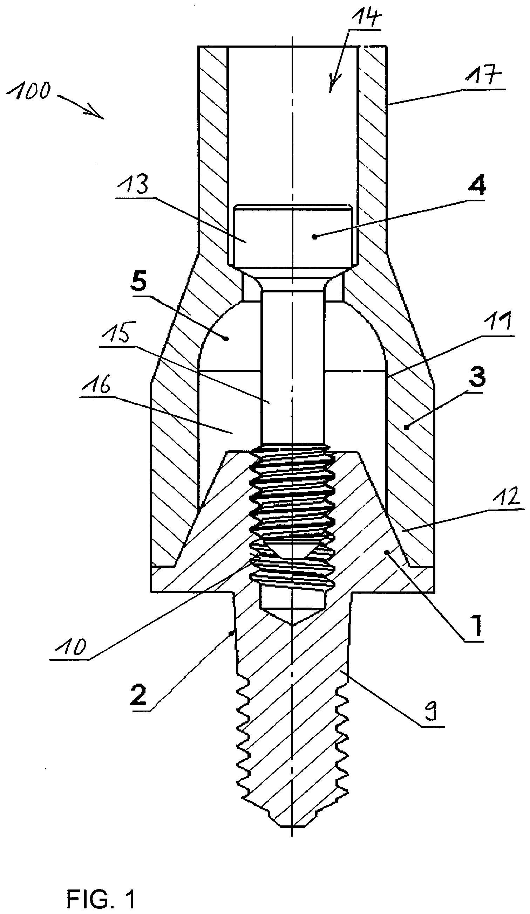

**Fig.1** zeigt eine Querschnittsansicht eines dentalen Verankerungssystem in einer ersten Verankerungsart 100 gemäß einer bevorzugten Ausführungsform der Erfindung im montierten Zustand eines Trägerelements 3 an einem Verankerungselement 9 mittels einer in eine Gewindebohrung 10 des Verankerungselements 9 eingeschraubten Befestigungsschraube 4.

Das Verankerungselement 9, hier beispielsweise ein Abutment weist einen hier beispielsweise ein Außengewinde umfassenden Verankerungsabschnitt 2 zur Verankerung in einem Innengewinde eines Implantats und einen hier beispielsweise als sich koronal verjüngender Außenkonus ausgebildeten Aufnahmeabschnitt 1 zur Aufnahme des Trägerelements 3 und die zentrale Gewindebohrung 10 auf. Das Trägerelement 3, welche hier beispielsweise als eine Hülse insbesondere aus Titan oder einer Titanlegierung ausgeführt ist, ist an seiner Außenoberfläche 17 zur direkten oder indirekten Befestigung an einem hier nihct gezeigten dentalen Aufbauelement, insbesondere an einer Dentalprothetik ausgebildet. Alternativ könnte das Trägerelement 3 auch durch ein Abutment gebildet werden oder ein solches umfassen, wobei dann das Verankerungselement 9 durch ein Implantat gebildet wird.

An einer Innenoberfläche 11 des Trägerelements 3 ist ein hier beispielsweise als sich ebenfalls koronal verjüngender Innenkonus ausgebildeter Lagerabschnitt 12 zur Lagerung an dem Aufnahmeabschnitt 1 des Verankerungselements 9, sowie beispielsweise axial anschließend ein apikal offener Hohlraum 5 ausgebildet. Bei dem hier gezeigten dentalen Verankerungsystem in der ersten Verankerungsart 100 ist ein Schraubenkopf 13 der Befestigungsschraube 4 an einem Rand einer zentralen Durchgangsbohrung 14 des Trägerelements 3 gekontert und ein Schaft 15 der Befestigungsschraube 4 durchragt koaxial den Hohlraum 5 bis in die Gewindebohrung 10 im Verankerungselement 2. In den Hohlraum 5 ragt im montierten Zustand des dentalen Verankerungsystems in der ersten Verankerungsart 100 der Aufnahmeabschnitt (Außenkonus) 1 des Verankerungselements 9 sowie der Schaft 15 der Befestigungsschraube 4 hinein.

Der Hohlraum 5 des Trägerelements 3 ist jedoch größer ausgeführt als lediglich für das Hineinragen des Aufnahmeabschnitts (Außenkonus) 1 des Verankerungselements 9 und des Schafts 15 der Befestigungsschraube 4 notwendig wäre, wie aus **Fig.** 1 ohne weiteres hervorgeht. So bildet der Hohlraum 5 bei dem hier gezeigten dentalen Verankerungsystem in der ersten Verankerungsart 100 einen lichten und freien Ringraum 16 aus, der hier von der radial äußeren Umfangsflche des Schafts 15 der Befestigungsschraube 4, dem Aufnahmeabschnitt (Außenkonus) 1 des Verankerungselements 9 und der Innenoberfläche 3 des Trägerelements 3 begrenzt wird.

Bei dem dentalen Verankerungsystem in der ersten Verankerungsart 100 ist dann das Trägerelement 3 an dem Verankerungselement 9 unter Verwendung der Befestigungsschraube 4 dadurch befestigt, dass der hier konische Lagerabschnitt 12 des Trägerelements 3 gegen den hier komplementär konischen Aufnahmeabschnitt 1 des Verankerungselements 9 mittels der eingeschraubten Befestigungsschraube 4 verspannt ist, die mit ihrem Schaft 15 den Hohlraum 5 durchragend in die Gewindebohrung 10 des Verankerungselements 9 eingeschraubt ist. Zusätzlich schlägt im montierten Zustand des dentalen Verankerungsystems in der ersten Verankerungsart 100 das hülsenförmige Trägerelement 3 mit seinem als zylindrischer Hülsenrand ausgebildeten apikalen Ende an einem als Anschlag ausgebildeten Bund des Verankerungselements an, wie **Fig. 1** zeigt.

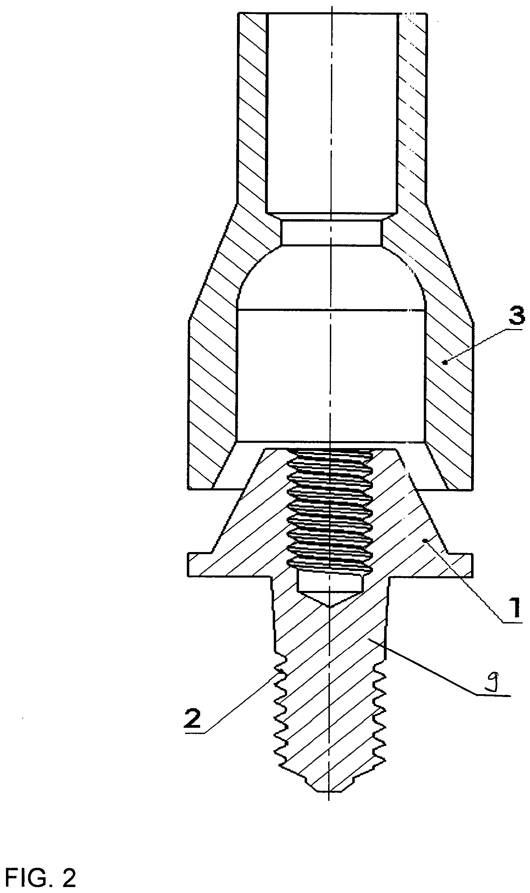

**Fig. 2** zeigt eine Querschnittsansicht des dentalen Verankerungssystems in der ersten Verankerungsart gemäß **Fig. 1** während einer Demontage des Trägerelements 3 von dem Verankerungselement 9 nach Entfernen der Befestigungsschraube 4 und axialen Abziehen des Trägerelements 3 von dem Verankerungselement 9. Dabei geraten der hier beispielsweise konische Lagerabschnitt 12 des Trägerelements 3 der hier beispielsweise konische Aufnahmeabschnitt 1 des Verankerungselements 9 außer Eingriff.

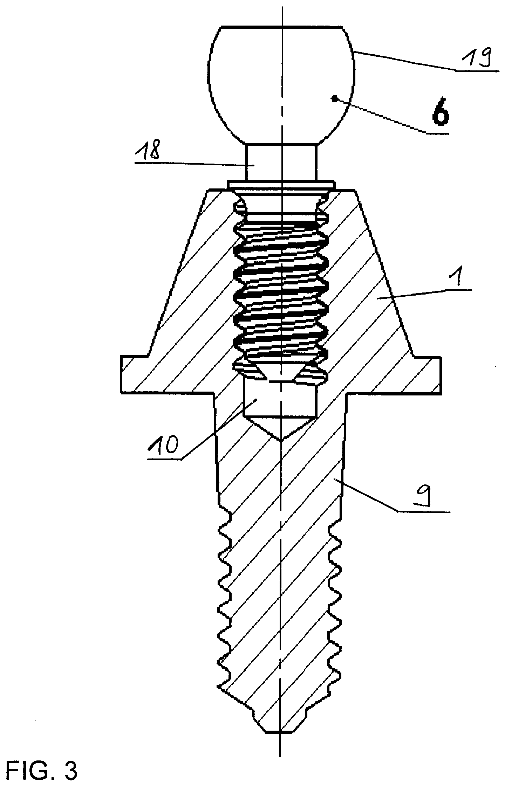

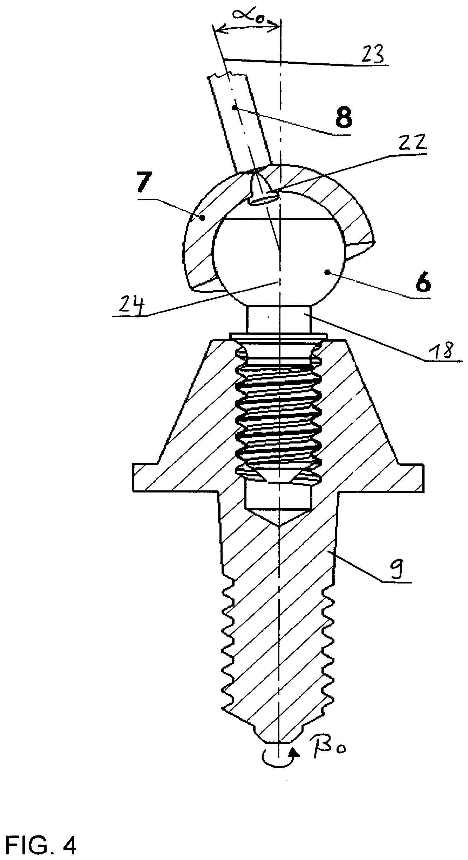

**Fig. 3** zeigt nun eine Querschnittsansicht des dentalen Verankerungssystems in der ersten Verankerungsart gemäß **Fig. 1****,** bei welchem anstatt der Befestigungsschraube 4 eine Schraube 18 in die Gewindebohrung 10 des Verankerungselements 9 eingeschraubt wurde, an welcher kopfseitig ein Innenteil 6 einer lösbaren formschlüssigen Verbindung zwischen einem in **Fig. 4** gezeigten Außenteil 7 und dem Innenteil 6 beispielsweise integral oder einstückig ausgebildet ist. Das Innenteil 6 ist dabei beispielsweise nach Art eines Schraubenkopfes der Schraube 18 ausgeführt und an seinem koronalen Ende ausgebildet.

Das Innenteil 6 besteht dann wie die Schraube 18 beispielsweise aus einem relativ steifen Material wie Metall, während das Außenteil 7 beispielsweise kappenartig ausgebildet ist aus einem demgegenüber elastischen Kunststoff besteht. Beispielsweise weist das Innenteil 6 eine äußere Kugelschichtfläche 19 und das Außenteil 7 eine zur äußeren Kugelschichtfläche 19 komplementäre innere Kugelschichtfläche 20 derart auf, dass das Innenteil 6 in das Außenteil 7 nach Art einer Druckknopf- oder Rastverbindung unter elastischer Verformung hier des Außenteils 7 eindrück- oder einrastbar ist und dann eine Art Kugelgelenk ausgebildet wird, bei welchem das Außenteil 7 und das Innenteil 6 relativ zueinander hier bevorzugt in allen Drehfreiheitsgraden frei schwenkbar sind, wie durch **Fig. 4** illustriert wird. Das kappenartige Außenteil 7 weist daher bevorzugt einen in Bezug zum Querschnitt des Innenteils 6 hinterschnittenen Querschnitt auf, so dass durch elastische Verformung hier des Außenteils 7 ein Einrasten oder Ausrasten der Druckknopf- oder Rastverbindung möglich ist.

Das dentale Verankerungssystem weist hier außerdem ein Ausrichtelement 8 auf, hier beispielsweise in Form eines Ausrichtstabs, dessen Ende an einem Eingriffsabschnitt 22 hier des Außenteils 7 eingreifbar ist, um eine Mittelachse 23 des hier kappenförmigen Außenteils 7 relativ zur Mittelachse 24 des Innenteils 6 in einen definierten Schwenkwinkel α₀ zu schwenken oder auszurichten.

Wegen der sphärischen und umlaufenden äußeren und inneren Kugelschichtflächen 19, 20 an dem Außenteil 7 und dem Innenteil 6 ist hier ein Verschwenken der Mittelachse 23 des Außenteils 7 relativ zur Mittelachse 24 des Innenteils 6 in allen Richtungen und insbesondere in allen Ebenen möglich. Folglich kann das Außenteil 7 mit Hilfe des Ausrichtelements 8 zusätzlich um die Mittelachse 24 des Innenteils 6 bzw. um die Mittelachse des Verankerungselements 9 um einen definierten Schwenkwinkel ß₀ verschwenkt werden. Die Mittelachse 24 des Innenteils 6 ist hier beispielsweise koaxial mit einer Mittelachse des Verankerungselements 9.

Der definierte Schwenkwinkel α₀ und der definierte Schwenkwinkel β₀ kennzeichnen dann eine definierte Relativschwenklage α₀, β₀ zwischen dem Außenteil 7 und dem Innenteil 6, in welcher hier beispielsweise die Mittelachse 23 des Außenelements 7 eine Richtung aufweist, welche bei einem Lösen der Druckknopf- oder Rastverbindung einer Abziehrichtung des Trägerelements 3 von dem Verankerungselement 2 entspricht. Umgekehrt repräsentiert bei einer Montage der Druckknopf- oder Rastverbindung die definierte Relativschwenklage α₀, β₀ eine Montagerichtung zwischen dem Trägerelement 3 und dem Verankerungselement 9. In der definierten Relativschwenklage α₀, β₀ können insbesondere die Mittelachse 23 des Außenteils 7 und die Mittelachse 24 des Innenteils 6 nicht koaxial sein.

Ein Verschwenken der Mittelachse 23 des Außenteils 7 gegenüber der Mittelachse 24 des Innenteils 6 in die definierte Relativschwenklage α₀, β₀ kann notwendig sein, wenn beispielsweise eine Zahnprothese mehrere Implantate umfasst, welche nicht parallel zueinander implantiert worden sind und ansonsten beim Abziehen des Trägerelements 3 von dem Verankerungselement 9 Verzwängungen unter den Implantaten und Beschädigungen an dem Außenteil 7 und/oder am Innenteil 6 entstehen würden.

Gemäß einer weiteren Ausführungsform kann auf ein Ausrichtelement 8 auch verzichtet und beispielsweise die definierte Relativschwenklage α₀, β₀ zwischen dem Außenteil 7 und dem Innenteil 6 durch händischen Eingriff hergestellt werden
**Fig. 4** zeigt dann den Zustand des dentalen Verankerungssystems, in dem das Außenteil 7 auf das Innenteil 6 unter äußerer Krafteinwirkung und unter elastischer Verformung des Außenteils 7 gesetzt und entsprechend der definierten Relativschwenklage α₀, β₀ hier beispielsweise durch das Ausrichtelement 8 ausgerichtet wurde. Die dann hier durch die Mittelachse 23 des ausgerichteten Außenteils 7 definierte Montage-/Demontagerichtung bzw. Abziehrichtung kann insbesondere, wie durch **Fig. 4** ersichtlich, einen von Null verschiedenen definierten Schwenkwinkel α₀ in Bezug zur Mittelachse 24 des Innenteils 6 aufweisen.

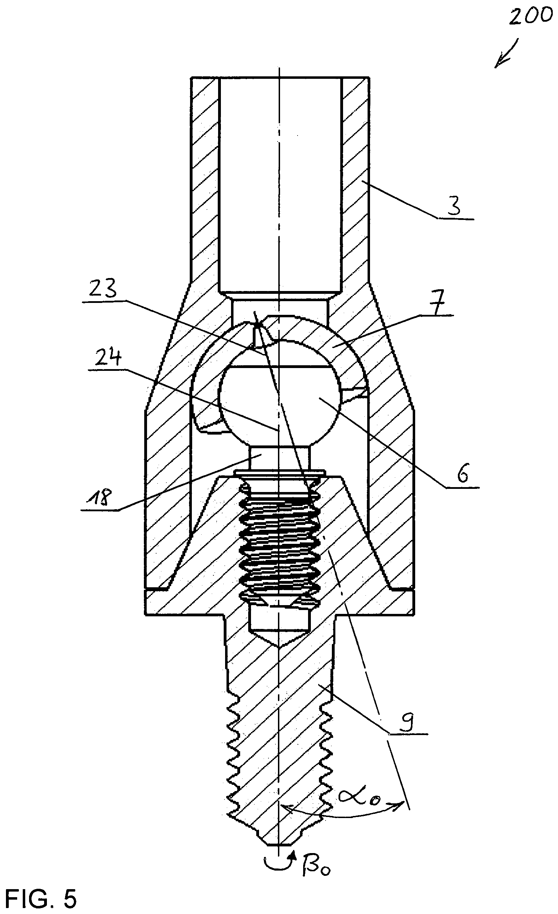

**Fig. 5** zeigt dann eine Querschnittsansicht des dentalen Verankerungssystems von **Fig. 1****,** bei welchem das Trägerelement 3 auf das in die definierte Relativschwenklage α₀, β₀ ausgerichtete Außenteil 7 aufgesetzt worden ist, wodurch das dentale Verankerungssystem in einer zweiten Verankerungsart 200 realisiert wird. Beispielsweise weist hierzu die Innenoberfläche 11 bzw. der Hohlraum 5 an seinem koronalen Ende eine kugelsegmentförmige Ausrundung 25 auf, welche komplementär zu dem Außenradius des kappenförmigen Außenteils 7 ausgebildet ist, damit das Außenteil 7 in der Ausrundung 25 des Trägerelements 3 angeordnet und befestigt werden kann. Die Verbindung zwischen dem Außenteil 7 und der Innenoberfläche 11 des Trägerelements in dem Hohlraum 5 kann beispielsweise durch eine stoffschlüssige Verbindung wie eine Klebung herbeigeführt werden. Stattdessen oder zusätzlich ist auch eine zerstörungsfrei lösbare Verbindung zwischen dem Außenteil 7 und dem Trägerelement 3 möglich.

In der zweiten Verankerungsart 200 des dentalen Verankerungssystems kann dann das Trägerelement 3 zusammen mit der von ihm getragenen Zahnprothetik und dem Außenteil 7 in der Abziehrichtung von dem Verankerungselement 9 und insbesondere von dem an diesem verbleibenden Innenteil 6 unter Lösen der Druckkopf- oder Rastverbindung beispielsweise von dem Patienten abgezogen werden, um beispielsweise eine Reinigung der Zahnprothetik vorzunehmen. Die Druckknopf- oder Rastverbindung aus Innenteil 6 und Außenteil 7 wird dann zerstörungsfrei gelöst, weil sich das Außenteil 7 aus elastischem Kunststoff beim Ausrasten des Innenteils 6 elastisch verformen kann.

Daher ist das dentale Verankerungssystem von der ersten Verankerungsart 100 gemäß **Fig. 1** auf die zweite Verankerungsart 200 gemäß **Fig. 5** insbesondere dadurch umrüstbar, dass die Befestigungsschraube 4 gelöst, das Trägerelement 3 von dem Verankerungselement 9 abgezogen, das Innenteil 6 an dem Verankerungselement 9 angeordnet bzw. mit diesem verbunden wird, das Außenteil 7 mit dem Innenteil 6 verrastet und erforderlichenfalls nach einer vorgegebenen Abziehrichtung ausgerichtet wird, und dann das Trägerelement an dem Außenteil 7 angeordnet bzw. mit diesem verbunden wird.

Weiterhin ist dann das dentale Verankerungssystem von der zweiten Verankerungsart 200 gemäß **Fig. 5** auf die erste Verankerungsart 100 gemäß **Fig. 1** insbesondere dadurch rückrüstbar, dass das Trägerelement 3 von dem Verankerungselement 9 in der Abziehrichtung abgezogen, das Außenteil 7 von dem Trägerelement 3 und die Schraube 18 mit dem Innenteil 6 von dem Verankerungselement 9 entfernt, und dann das Trägerelement 3 wieder mit dem Verankerungselement 9 axial zusammengeführt und die Befestigungsschraube 4 durch die Durchgangsbohrung 14 im Trägerelement 3 hindurchgeführt und in die Gewindebohrung 10 des Verankerungselements 9 eingeschraubt wird. Dies ist ohne weiteres möglich, da in dem Verankerungselement 9 weiterhin die Gewindebohrung 10 vorhanden ist.

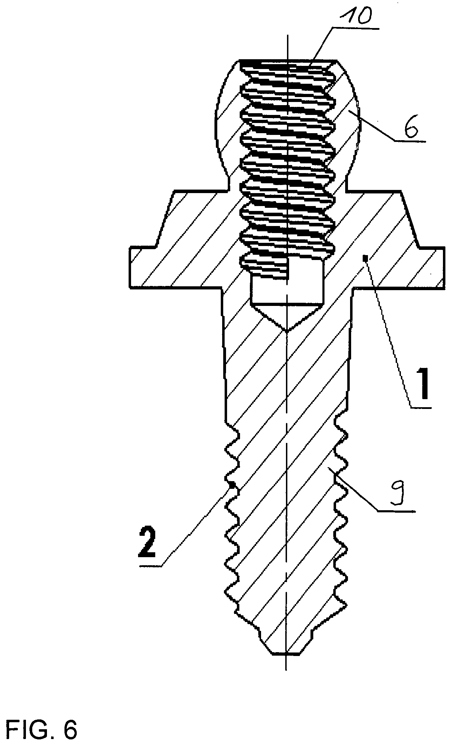

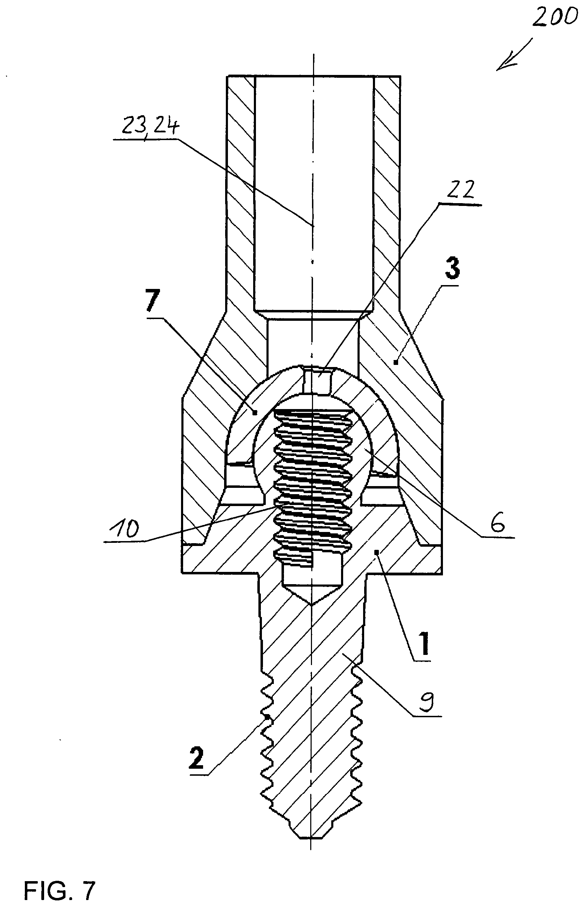

**Fig. 6** und **Fig. 7** zeigen jeweils eine Querschnittsansicht eines dentalen Verankerungssystem in der zweiten Verankerungsart gemäß einer weiteren Ausführungsform der Erfindung, bei welcher das Innenteil 6 der lösbaren formschlüssigen Verbindung an dem Verankerungselement 9 bzw. an dessen Aufnahmeabschnitt 1 integral angeformt ist. Dann kann die zusätzliche Schraube 18 der Ausführungsform von **Fig. 3** bis **Fig. 5** entfallen. Die Gewindebohrung 10 für die Befestigungsschraube 4 durchragt dann beispielsweise das Innenteil 6 zentral, wie **Fig. 6** zeigt.

**Fig. 7** zeigt das dentale Verankerungssystems in der zweiten Verankerungsart 200 im montierten Zustand, d.h. mit auf dem Innenteil 6 montiertem Außenteil 7 und Trägerelement 3. Die Umrüstung von der ersten Verankerungsart auf die zweite Verankerungsart und umgekehrt erfolgt dann wie bei der Ausführungsform nach den Figuren 1 bis 5 beschrieben mit dem einzigen Unterschied, dass das Innenteil nicht am Verankerungselement 9 angeordnet oder von diesem entfernt werden muss.

Außerdem sind hier die Mittelachsen 23, 24 des Außenteils 7 und des Innenteils 6 beispielsweise parallel zueinander, so dass das Außenteil 7 in diese Lage mittels des Ausrichtelements 8 gegenüber dem Innenteil 6 ausgerichtet oder das Außenteil 7 auf das Innenteil 6 von Anfang an aufgesetzt worden ist.

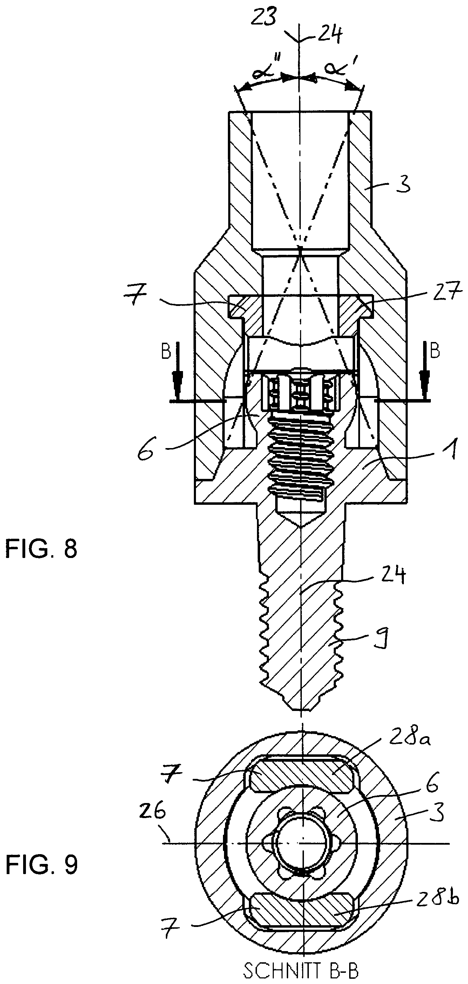

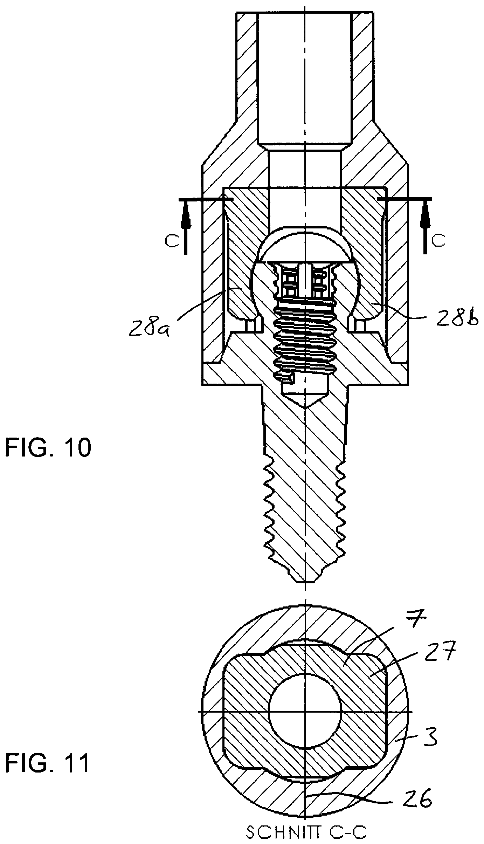

In **Fig. 8** ist eine Querschnittsansicht eines dentalen Verankerungssystems in der zweiten Verankerungsart 200 gemäß einer weiteren Ausführungsform der Erfindung gezeigt. **Fig. 9** zeigt eine Querschnittsansicht entlang der Linie B-B des dentalen Verankerungssystems von **Fig. 8****,** **Fig. 10** eine gegenüber der Querschnittsansicht von **Fig. 9** um 90 Grad verdrehte Querschnittsansicht des dentalen Verankerungssystems von **Fig. 8****,** und **Fig. 11** eine Querschnittsansicht entlang der Linie C-C des dentalen Verankerungssystems von **Fig. 10****.** Das Innenteil 6 ist hier wie der Ausführungsform von **Fig. 6** und **Fig. 7** beispielsweise einstückig mit dem Verankerungselement 9 ausgeführt. Außerdem ist hier auch die Mittelachse 24 des Innenteils 6 beispielsweise koaxial mit einer Mittelachse des Verankerungselements 9.

Bei dieser weiteren Ausführungsform können das Außenteil 7 und das Innenteil 6 zusammen ein Doppelgelenk ausbilden.

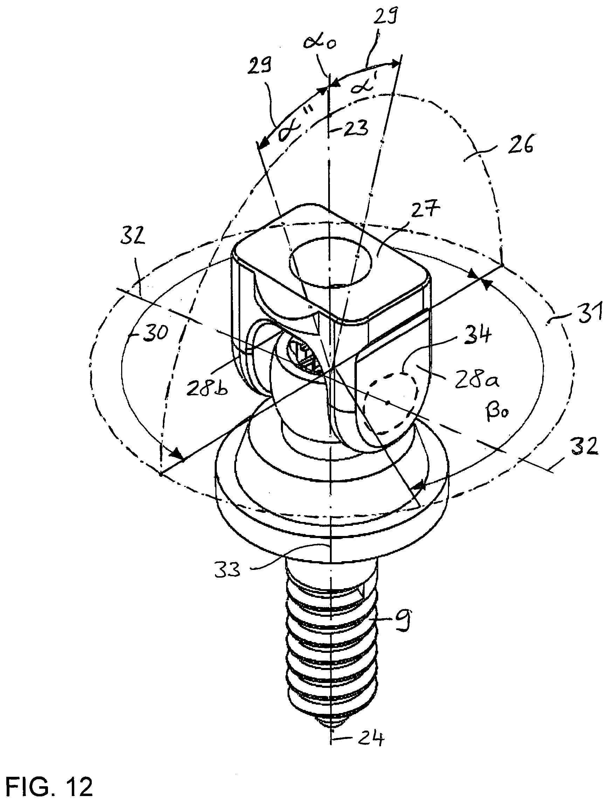

Bei einem ersten Gelenk des Doppelgelenks kann in **Fig. 12** durch einen ersten Pfeil 29 symbolisiertes Verschwenken zwischen dem Außenteil 7 und dem Innenteil 6 unter Änderung des Schwenkwinkels α zwischen der Mittelachse 23 des Außenteils 7 und der Mittelachse 24 des Innenteils 6 vorzugsweise um ein erste Gelenkachse 32 und in einer ersten Schwenkebene 26 und in beiden Drehrichtungen innerhalb dieser ersten Schwenkebene 26 stattfinden. Dann kann wie bei der oben beschriebenen Ausführungsform zwischen der Mittelachse 23 des Außenteils 7 und der Mittelachse 24 des Innenteils 6 ein definierter Schwenkwinkel α₀ eingestellt werden, welcher eine gewünschte oder vorgegebene Montage- oder Demontagerichtung des Trägerelements 3 in Bezug zum Verankerungselement 9 innerhalb der ersten Schwenkebene 26 kennzeichnet. Die erste Schwenkebene 26 ist insbesondere parallel zur Mittelachse 24 des Innenteils 6 oder parallel zur Mittelachse des Verankerungselements 9. Weiterhin ist die erste Gelenkachse 32 beispielsweise senkrecht zur Mittelachse 24 des Innenteils 6.

Die erste Schwenkebene 26 kann durch ein Verdrehen zwischen dem bereits mit dem Innenteil 6 formschlüssig verbundenen Außenteil 7 und dem Innenteil 6 insbesondere um die Mittelachse 24 des Innenteils 6 oder die Mittelachse des Verankerungselements 9 um eine zweite Gelenkachse 33 eines zweiten Gelenks des Doppelgelenks in einer zweiten Schwenkebene 31 um einen definierten Schwenkwinkel β₀ derart ausgerichtet werden, dass sie parallel zur gewünschten oder vorgegebenen Montage- oder Demontagerichtung des Trägerelements 3 in Bezug zum Verankerungselement 9 ist. Insbesondere ist hier die zweite Gelenkachse 33 des zweiten Gelenks koaxial mit der Mittelachse 24 des Innenteils 6 oder mit der Mittelachse der Verankerungselements 9.

Dabei ist ein Verschwenken des Außenteils 7 um die Mittelachse 24 des Innenteils 6 um den Schwenkwinkel β bis zu 180 Grad in beiden Richtungen in der zweiten Schwenkebene 31 möglich, wie der zweite Pfeil 30 in **Fig. 12** symbolisiert. Die zweite Schwenkebene 31 ist hier insbesondere senkrecht zur Mittelachse 24 des Innenteils 6 und/oder zur Mittelachse des Verankerungselements 9. Weiterhin ist beispielsweise die zweite Gelenkachse 33 des zweiten Gelenks senkrecht zur ersten Gelenkachse 32 des ersten Gelenks.

Bei einer solchen Drehung entlang des zweiten Pfeils 30, welcher in **Fig. 12** die beiden möglichen Drehrichtungen in der zweiten Schwenkebene 31 kennzeichnen, ändert sich aber der Schwenkwinkel α zwischen der Mittelachse 23 des Außenelements 7 und der Mittelachse 24 des Innenteils 6 nicht, wie anhand von **Fig. 12** leicht vorstellbar ist. Insbesondere ist hier die erste Schwenkebene 26 senkrecht zur zweiten Schwenkebene 31.

Bei der hier in **Fig. 8** bis **Fig. 12** gezeigten Ausführungsform beträgt der definierte Schwenkwinkel α₀ zwischen der Mittelachse 23 des Außenteils 7 und der Mittelachse 24 des Innenteils 6 beispielsweise gleich Null Grad, er kann aber auch von Null verschieden sein und insbesondere in einem Bereich liegen, welcher von zwei von Null verschiedenen Grenz-Schwenkwinkeln α' und α" liegt.

Der definierte Schwenkwinkel α₀ und der Schwenkwinkel β₀ kennzeichnen daher eine definierte Relativschwenklage α₀, β₀ des Außenteils 7 und des Innenteils 6 relativ zueinander, welche eine gewünschte oder vorgegebene Montage- oder Demontagerichtung des Trägerelements 3 in Bezug zum Verankerungselement 9 repräsentiert. In der definierten Relativschwenklage α₀, β₀ können insbesondere die Mittelachse 23 des Außenteils 7 und die Mittelachse 24 des Innenteils 6 nicht koaxial sein.

Zur Realisierung der oben beschriebenen Kinematik mit erster Schwenkebene 26 und zweiter Schwenkebene 31 kann das Außenteil 7 beispielsweise zwei von einem Grundkörper 27 parallel wegragende Wangen 28a, 28b mit jeweils inneren Kugelschicht- oder Kugelsegmentflächen 20 aufweisen, welche diametral gegenüber liegende äußere Kugelschicht- oder Kugelsegmentflächen 19 am Innenteil 6 derart kontaktierend umgreifen, dass die erste Schwenkebene 26 parallel zu den beiden Wangen 28a, 28b verläuft, wie insbesondere **Fig. 9** veranschaulicht. Hierdurch wird dann die erste Schwenkebene 26 definiert, welche parallel zu den Wangen 28a, 28b ist.

Vorzugsweise lediglich innerhalb dieser ersten Schwenkebene 26 ist es dann möglich, die Mittelachse 23 des Außenteils 7 gegenüber der Mittelachse 24 des Innenteils 6 zu verschwenken und dabei den Schwenkwinkel α zu ändern, im gezeigten Ausführungsbeispiel beispielsweise um maximal 22 Grad in beide Richtungen. Dann kann die Mittelachse 23 des Außenteils 7 die beiden in **Fig. 12** eingezeichneten Grenz-Schwenkwinkel α' und a" in Bezug zur Mittelachse 24 des Innenteils bzw. zur Mittelachse des Verankerungselements 9 einnehmen. Die Grenz-Schwenkwinkel α' und α" des Außenteils 7 relativ zum Innenteil 6 innerhalb der ersten Schwenkebene 26 werden hier beispielsweise durch den Konuswinkel der Konusfläche des Aufnahmeabschnitts 1 des Verankerungselements 9 definiert.

Der Vorteil dieser Ausführungsform liegt dann darin, dass zum Herstellen der definierten Schwenklage α₀, β₀ zwischen dem Außenteil 7 und dem Innenteil 6, welche dann einer gewünschten oder vorgegebenen Montage- oder Demontagerichtung zwischen dem Trägerelement 3 und dem Verankerungselement 9 entspricht oder eine solche repräsentiert, lediglich das Außenteil 7 mit dem Innenteil 6 formschlüssig verrastet wird, hier beispielsweise, indem das Außenteil 7 unter elastischer Verformung der Wangen 28a, 28b axial auf das Innenteil 6 gesteckt und die lösbare formschlüssige und schwenkbare Verbindung zwischen dem Außenteil 7 und dem Innenteil 6 dann durch Rückfederung der beiden Wangen 28a, 28b zustande kommt. Dann wird das Außenteil 7 gegenüber der Mittelachse 24 des Innenteils 6 bzw. gegenüber der Mittelachse des Verankerungselements 9 um die zweite Gelenkachse 33 in einer der in **Fig. 12** durch den zweiten Pfeil 30 symbolisierten Richtungen in der zweiten Schwenkebene 31 so verdreht, dass der definierte Schwenkwinkel β₀ der hier beispielsweise durch die Wangen 28a, 28b des Außenteils 7 definierten ersten Schwenkebene 26 eingestellt wird. Sodann wird das Außenteil 7 gegenüber dem Innenteil 6 um die erste Gelenkachse 32 und innerhalb der ersten Schwenkebene 26 in einer der durch den ersten Pfeil 29 in **Fig. 12** symbolisierten Richtungen so verdreht, dass die Mittelachse 23 des Außenteils 7 innerhalb der ersten Schwenkebene 26 den definierte Schwenkwinkel α₀ in Bezug zur Mittelachse 24 des Innenteils 6 einnimmt.

Die Reihenfolge des Verschwenkens um die erste Gelenkachse 32 und die zweite Gelenkachse 33 ist nicht entscheidend, d.h. es ist auch möglich, zuerst um die erste Gelenkachse 32 zu verschwenken und dann um die zweite Gelenkachse 33, oder in umgekehrter Reihenfolge.

Bedingt durch den gegenseitigen Eingriff der inneren Kugelschicht- oder Kugelsegmentflächen 20 an den beiden Wangen 28a, 28b und der äußeren Kugelschicht- oder Kugelsegmentflächen 19 am Innenteil 9 ergeben sich in **Fig. 12** durch eine gestrichelte Linie illustrierte Kreise 34 als Ränder von sich kontaktierenden Flächenabschnitten der äußeren Kugelschicht- oder Kugelsegmentflächen 19 und der inneren Kugelschicht- oder Kugelsegmentflächen 20. Dann sind in vorteilhafter Weise unabhängig von der Schwenklage der Wangen 28a, 28b bzw. des Außenteils um die erste Gelenkachse 32 in Bezug zu dem Innenteil 6 stets die gleichen Haltekräfte der formschlüssigen Rast- oder Druckknopfverbindung vorhanden.

Wie auch insbesondere aus **Fig. 12** ersichtlich, ist bedingt durch die geometrischen Verhältnisse (äußere Kugelschicht- oder Kugelsegmentflächen 19 und innere Kugelschicht- oder Kugelsegmentflächen 20) zwischen den Wangen 28a, 28b und dem Innenteil 6 ein Verschwenken des Außenteils 7 in einer hier lediglich gedachten Schwenkebene, welche die erste Gelenkachse 32 enthält, nicht möglich. Vielmehr ist in dem ersten Gelenk beispielsweise lediglich ein erster Drehfreiheitsgrad um die erste Gelenkachse 32 und in dem zweiten Gelenk lediglich ein zweiter Drehfreiheitsgrad um die zweite Gelenkachse 33 vorgesehen. Dies hat den Vorteil, dass ein Ausrichten des hier angenommen zunächst mobilen Außenteils 7 gegenüber dem hier angenommen stationären Innenteil 6 in definierter Weise, nämlich nur um zwei Gelenkachsen 32, 33 erfolgen kann, ohne dass es dabei zu einem unkontrollierten Verkippen des Außenteils 7 gegenüber dem Innenteil 6 kommen kann, wenn etwa jeglicher Drehfreiheitsgrad um jegliche Drehachse wie bei einem Kugelgelenk möglich ist.

Dann muss lediglich noch hier beispielsweise das Trägerelement 3 an dem in die definierte Schwenklage α₀, β₀ verschwenkten Außenteil 7 befestigt werden, insbesondere durch Klebung. Indem das Innenteil 6 am Verankerungselement 9 und das Außenteil 7 dann am Trägerelement in jeweils einer definierten Lage festgelegt ist, bleibt diese definierte Lage auch bei einer Montage oder Demontage des Trägerelements 3 und des Verankerungselements 9 erhalten. Die definierte Schwenklage α₀, β₀ zwischen dem Außenteil 7 und dem Innenteil 6 repräsentiert dann eine definierte oder vorgegebene Montage-/Demontagerichtung des Trägerelements 3 in Bezug zum Verankerungselement 9, um hier beispielsweise das dentale Verankerungssystem in der zweiten Verankerungsart 200 zu montieren. Bei der Montage wird das Trägerelement 3 in der durch die definierte Schwenklage α₀, β₀ vorgegebenen Montagerichtung auf das Verankerungselement 9 aufgesetzt, wodurch das Innenteil 6 in formschlüssigen Eingriff mit dem Außenteil 7 gerät, indem sich die beiden Wangen 28a, 28b elastisch verformen und dann auf das Innenteil 6 rückfedern.

In umgekehrter Weise wird zur Demontage des dentalen Verankerungssystem in der zweiten Verankerungsart 200 lediglich das Trägerelement 3 von dem Verankerungselement 9 in der durch die definierte Schwenklage α₀, β₀ festgelegten Demontagerichtung abgezogen, wobei dabei das Innenteil 6 außer Eingriff mit dem Außenteil 7 gerät, indem sich die beiden Wangen 28a, 28b elastisch verformen und dann rückfedern.

### BEZUGSZEICHENLISTE

- 1: Aufnahmeabschnitt
- 2: Verankerungsabschnitt
- 3: Trägerelement
- 4: Befestigungsschraube
- 5: Hohlraum
- 6: Innenteil
- 7: Außenteil
- 8: Ausrichtelement
- 9: Verankerungselement
- 10: Gewindebohrung
- 11: Innenoberfläche
- 12: Lagerabschnitt
- 13: Schraubenkopf
- 14: Durchgangsbohrung
- 15: Schaft
- 16: Ringraum
- 17: Außenoberfläche
- 18: Schraube
- 19: äußere Kugelschichtfläche
- 20: innere Kugelschichtfläche
- 22: Eingriffsabschnitt
- 23: Abziehrichtung/Mittelachse des Außenteils
- 24: Mittelachse des Innenteils
- 25: Ausrundung
- 26: erste Schwenkebene
- 27: Grundkörper
- 28a: Wange
- 28b: Wange
- 29: erster Pfeil
- 30: zweiter Pfeil
- 31: zweite Schwenkebene
- 32: erste Gelenkachse
- 33: zweite Gelenkachse
- 34: Kreise
- 100: dentales Verankerungssystem in der ersten Verankerungsart
- 200: dentales Verankerungssystem in der zweiten Verankerungsart
- α: Schwenkwinkel
- α',α": Grenz-Schwenkwinkel
- β: Schwenkwinkel
- α₀: definierter Schwenkwinkel
- β₀: definierter Schwenkwinkel
- α₀, β₀: definierte Schwenklage

## Patentansprüche

1. Dentales Verankerungssystem zur Verankerung eines Trägerelements (3) an einem Verankerungselement (9), mit wenigstens dem Trägerelement (3), dem Verankerungselement (9), und einer Befestigungsschraube (4), wobei
a) das Verankerungselement (9) einen Aufnahmeabschnitt (1) zur Aufnahme des Trägerelements (3) und eine Gewindebohrung (10) aufweist, wobei
b) das Trägerelement (3) zur direkten oder indirekten Befestigung an einem dentalen Aufbauelement, insbesondere an einer Dentalprothetik ausgebildet ist, und einen Lagerabschnitt (12) zur Lagerung an dem Aufnahmeabschnitt (1) des Verankerungselements (9) ausbildet, wobei
c) das Trägerelement (3) an dem Verankerungselement (9) in einer ersten Verankerungsart (100) unter Verwendung der Befestigungsschraube (4) dadurch befestigbar ist, dass das Trägerelement (3) mit seinem Lagerabschnitt (12) an dem Aufnahmeabschnitt (1) des Verankerungselements (9) aufgenommen und die Befestigungsschraube (4) in die Gewindebohrung (10) des Verankerungselements (9) eingeschraubt wird, wobei
d) das Trägerelement (3) an dem Verankerungselement (9) wahlweise auch mittels einer zweiten Verankerungsart (200) ohne Verwendung der Befestigungsschraube (4) dadurch lösbar befestigbar ist, dass
e) eine zerstörungsfrei lösbare und formschlüssige Verbindung zwischen einem Außenteil (7) und einem Innenteil (6) vorgesehen wird, bei welcher das Innenteil (6) in das Außenteil (7) nach Art einer Druckknopf- oder Rastverbindung unter elastischer Verformung des Innenteils (6) und/oder des Außenteils (7) einrastbar ist, wobei
f) das Innenteil (6) an dem Verankerungselement (9) und das Außenteil (7) an dem Trägerelement (3) vorgesehen wird, und das Außenteil (7) ein separates Teil darstellt, welches an dem Trägerelement (3) befestigbar ist, wobei
g) das Trägerelement (3) mit seinem Lagerabschnitt (12) an dem Aufnahmeabschnitt (1) des Verankerungselements (9) unter zerstörungsfrei formschlüssigem Einrasten des Innenteils (6) in das Außenteil (7) aufgenommen und dadurch das Trägerelement (3) an dem Verankerungselement (9) lösbar gehalten wird, wobei
h) zum Lösen der zweiten Verankerungsart (200) das Trägerelement (3) von dem Verankerungselement (9) unter Entrasten des Innenteils (6) aus dem Außenteil (7) abziehbar ist, wobei
i) das dentale Verankerungssystem von der zweiten Verankerungsart (200) auf die erste Verankerungsart (100) dadurch umrüstbar ist, dass das Trägerelement (3) von dem Verankerungselement (9) abgezogen, und dann das Trägerelement (3) mit seinem Lagerabschnitt (12) an dem Aufnahmeabschnitt (1) des Verankerungselements (9) aufgenommen und die Befestigungsschraube (4) in die Gewindebohrung (10) des Verankerungselements (9) eingeschraubt wird, und wobei
j) das dentale Verankerungssystem von der ersten Verankerungsart (200) auf die zweite Verankerungsart (200) dadurch umrüstbar ist, dass die Befestigungsschraube (4) gelöst, das Trägerelement (3) von dem Verankerungselement (9) abgezogen und dann das Innenteil (6) zerstörungsfrei in das Außenteil (7) eingerastet wird, und dann das Trägerelement (3) mit dem Verankerungselement (9) zusammengeführt wird, und wobei
k) das Außenteil (7) wenigstens teilweise sphärisch ausgebildet und das Innenteil (6) wenigstens teilweise derart komplementär sphärisch ausgebildet ist, dass bei in das Außenteil (7) eingerastetem Innenteil (6) das Außenteil (7) und das Innenteil (6) alleine relativ zueinander in eine Vielzahl von Relativschwenklagen (a, ß) verschwenkbar sind.

2. Dentales Verankerungssystem nach Anspruch 1, **dadurch gekennzeichnet, dass** das Trägerelement (3) mit seiner Innenoberfläche (11) einen apikal offenen Hohlraum (5) ausbildet, welcher ausgebildet ist, dass eine Anordnung des Innenteils (6) und/oder des Außenteils (7) in dem Hohlraum (5) möglich ist, oder dass das Innenteil (5) und/oder das Außenteil (7) in dem Hohlraum (5) bereits von Anfang an angeordnet und dabei eine wenigstens teilweise Durchführung eines Schafts (15) der Befestigungschraube (4) durch den Hohlraum (5) hindurch möglich ist.

3. Dentales Verankerungssystem nach einem der vorhergehenden Ansprüche, **dadurch gekennzeichnet, dass** das Innenteil (6) an einem koronalen Ende einer Schraube (18) ausgebildet ist, welche bei der zweiten Verankerungsart (200) anstelle der Befestigungsschraube (4) mit ihrem apikalen Ende in die Gewindebohrung (10) des Verankerungselements (9) einschraubbar ist.

4. Dentales Verankerungssystem nach Anspruch 1 oder 2, **dadurch gekennzeichnet, dass**
a) das Innenteil (6) ein separates Teil darstellt, welches an dem Verankerungselement (9) befestigbar ist, oder dass
b) das Innenteil (6) an dem Verankerungselement (9) integral ausgebildet ist.

5. Dentales Verankerungssystem nach einem der vorhergehenden Ansprüche, **dadurch gekennzeichnet, dass** das Innenteil (6) eine äußere Kugelschicht- oder Kugelsegmentfläche (19) und das Außenteil (7) eine zur äußeren Kugelschicht- oder Kugelsegmentfläche (19) komplementäre innere Kugelschicht- oder Kugelsegmentfläche (20) aufweist, wobei die innere Kugelschicht- oder Kugelsegmentfläche (20) und die äußere Kugelschicht- oder Kugelsegmentfläche (19) einander kontaktieren.

6. Dentales Verankerungssystem nach Anspruch 5, **dadurch gekennzeichnet, dass** eine definierte Relativschwenklage (α₀, β₀) der Vielzahl von Relativschwenklagen (α, β) vorgesehen ist, in welcher die Richtung einer Mittelachse (23) des Außenteils (7) oder die Richtung einer Mittelachse (24) des Innenteils (6) einer Montage- und/oder Demontagerichtung des Trägerelements (3) in Bezug auf das Verankerungselement (9) entspricht und in welcher das Trägerelement (3) und das Verankerungselement (9) montiert und demontiert werden können.

7. Dentales Verankerungssystem nach Anspruch 6, **dadurch gekennzeichnet, es** wenigstens ein Ausrichtelement (8) und das Außenteil (7) und/oder das Innenteil (6) einen Eingriffsabschnitt (22) zum Eingriff des Ausrichtelements (8) derart umfasst, dass durch einen Eingriff des wenigstens einen Ausrichtelements (8) am Eingriffsabschnitt (22) und durch ein nachfolgendes Bewegen des wenigstens einen Ausrichtelements (8) das Außenteil (7) und das Innenteil (6) in die definierte Relativschwenklage (α₀, β₀) bringbar sind.

8. Dentales Verankerungssystem nach Anspruch 6 oder 7, **dadurch gekennzeichnet, dass** das Außenteil (7) und das Innenteil (6) zusammen ein Doppelgelenk derart ausbilden, dass
a) mit Hilfe eines ersten Gelenks des Doppelgelenks ein relatives Verschwenken des Außenteils (7) und des Innenteils (6) um eine erste Gelenkachse (32) in einer ersten Schwenkebene (26) möglich ist, und
b) mit Hilfe eines zweiten Gelenks des Doppelgelenks ein relatives Verschwenken des Außenteils (7) und des Innenteils (6) um eine zweite Gelenkachse (33) und in einer zweiten Schwenkebene (26) möglich ist.

9. Dentales Verankerungssystem nach Anspruch 8, **dadurch gekennzeichnet, dass** die erste Gelenkachse (32) senkrecht zur zweiten Gelenkachse (33) ist.

10. Dentales Verankerungssystem nach Anspruch 8 oder 9, **dadurch gekennzeichnet, dass** das Außenteil (7) zwei von einem Grundkörper (27) parallel wegragende Wangen (28a, 28b) mit jeweils inneren Kugelschicht- oder Kugelsegmentflächen (20) aufweist, welche diametral gegenüber liegende äußere Kugelschicht- oder Kugelsegmentflächen (19) am Innenteil (6) derart kontaktierend umgreifen, dass die erste Schwenkebene (26) parallel zu den beiden Wangen (28a, 28b) und die erste Gelenkachse senkrecht zu den beiden Wangen (18a, 28b) verläuft.

11. Dentales Verankerungssystem nach einem der Ansprüche 8 bis 10, **dadurch gekennzeichnet, dass** die zweite Gelenkachse (33) koaxial in Bezug auf die Mittelachse (24) des Innenteils (6) oder in Bezug auf eine Mittelachse des Verankerungselements (9) ist.

12. Dentales Verankerungssystem nach einem der Ansprüche 6 bis 11, **dadurch gekennzeichnet, dass** in der definierten Relativschwenklage (ao, βo)
a) das Außenteil (7) an dem Trägerelement (3) befestigt ist, und
b) das Innenteil (6) an dem Verankerungselement (9) befestigt ist.

13. Dentales Verankerungssystem nach einem der vorhergehenden Ansprüche, **dadurch gekennzeichnet, dass** das Trägerelement (3) eine zentrale Durchgangsöffnung (14) mit einem Öffnungsrand zum Kontern eines Schraubenkopfes (13) der Befestigungsschraube (4) und zur Durchführung eines Schafts (15) der Befestigungsschraube (4) aufweist.

14. Dentales Verankerungssystem nach einem der vorhergehenden Ansprüche, **dadurch gekennzeichnet, dass** der Aufnahmeabschnitt (1) des Verankerungselements (9) und der Lagerabschnitt (12) des Trägerelements (3) durch komplementär ausgebildete Konusflächen gebildet werden.

15. Dentales Verankerungssystem nach einem der vorhergehenden Ansprüche, **dadurch gekennzeichnet, dass** das Verankerungselement (9) ein Implantat und/oder ein Abutment umfasst.

16. Dentales Verankerungssystem zur Verankerung eines Trägerelements (3) an einem Verankerungselement (9), mit wenigstens dem Trägerelement (3) und dem Verankerungselement (9), wobei
a) das Verankerungselement (9) einen Aufnahmeabschnitt (1) zur Aufnahme des Trägerelements (3) und eine Gewindebohrung (10) aufweist,
b) das Trägerelement (3) zur direkten oder indirekten Befestigung an einem dentalen Aufbauelement, insbesondere an einer Dentalprothetik ausgebildet ist, und einen Lagerabschnitt (12) zur Lagerung an dem Aufnahmeabschnitt (1) des Verankerungselements (9) ausbildet,
c) das Trägerelement (3) an dem Verankerungselement (9) in einer ersten Verankerungsart (100) unter Verwendung einer Befestigungsschraube (4) dadurch befestigbar ist, dass das Trägerelement (3) mit seinem Lagerabschnitt (12) an dem Aufnahmeabschnitt (1) des Verankerungselements (9) aufgenommen und die Befestigungsschraube (4) in die Gewindebohrung (10) des Verankerungselements (9) eingeschraubt werden kann, wobei
d) das Trägerelement (3) an dem Verankerungselement (9) wahlweise auch mittels einer zweiten Verankerungsart (200) ohne Verwendung der Befestigungsschraube (4) dadurch lösbar befestigbar ist, dass
e) eine zerstörungsfrei lösbare und formschlüssige Verbindung zwischen einem Außenteil (7) und einem Innenteil (6) vorgesehen wird, bei welcher das Innenteil (6) in das Außenteil (7) nach Art einer Druckknopf- oder Rastverbindung unter elastischer Verformung des Innenteils (6) und/oder des Außenteils (7) einrastbar ist, und
f1) das Außenteil (7) an dem Verankerungselement (9) und das Innenteil (6) an dem Trägerelement (3) vorgesehen wird, oder
f2) das Innenteil (6) an dem Verankerungselement (9) und das Außenteil (7) an dem Trägerelement (3) vorgesehen wird, und
g) das Trägerelement (3) mit seinem Lagerabschnitt (12) an dem Aufnahmeabschnitt (1) des Verankerungselements (9) unter zerstörungsfrei formschlüssigem Einrasten des Innenteils (6) in das Außenteil (7) aufgenommen und dadurch das Trägerelement (3) an dem Verankerungselement (9) lösbar gehalten wird, wobei
h) zum Lösen der zweiten Verankerungsart (200) das Trägerelement (3) von dem Verankerungselement (9) unter Entrasten des Innenteils (6) aus dem Außenteil (7) abziehbar ist, wobei
i) das Außenteil (7) wenigstens teilweise sphärisch ausgebildet und das Innenteil (6) wenigstens teilweise derart komplementär sphärisch ausgebildet ist, dass bei in das Außenteil (7) eingerastetem Innenteil (6) das Außenteil (7) und das Innenteil (6) alleine relativ zueinander in eine Vielzahl von Relativschwenklagen (α, β) verschwenkbar sind, und wobei
j) eine definierte Relativschwenklage (α₀,β₀) der Vielzahl von Relativschwenklagen (α, β) vorgesehen ist, in welcher die Richtung einer Mittelachse (23) des Außenteils (7) oder die Richtung einer Mittelachse (24) des Innenteils (6) einer Montage- und/oder Demontagerichtung des Trägerelements (3) in Bezug auf das Verankerungselement (9) entspricht und in welcher das Trägerelement (3) und das Verankerungselement (9) montiert und demontiert werden können, und wobei
k) das Außenteil (7) und das Innenteil (6) zusammen ein Doppelgelenk derart ausbilden, dass mit Hilfe eines ersten Gelenks des Doppelgelenks ein relatives Verschwenken des Außenteils (7) und des Innenteils (6) um eine erste Gelenkachse (32) in einer ersten Schwenkebene (26) möglich ist, und mit Hilfe eines zweiten Gelenks des Doppelgelenks ein relatives Verschwenken des Außenteils (7) und des Innenteils (6) um eine zweite Gelenkachse (33) und in einer zweiten Schwenkebene (31) möglich ist, und wobei
l) das Außenteil (7) zwei von einem Grundkörper (27) parallel wegragende Wangen (28a, 28b) mit jeweils inneren Kugelschicht- oder Kugelsegmentflächen (20) aufweist, welche diametral gegenüber liegende äußere Kugelschicht- oder Kugelsegmentflächen (19) am Innenteil (6) derart kontaktierend umgreifen, dass die erste Schwenkebene (26) parallel zu den beiden Wangen (28a, 28b) und die erste Gelenkachse senkrecht zu den beiden Wangen (18a, 28b) verläuft, und wobei
m) das Trägerelement (3) eine zentrale Durchgangsöffnung (14) mit einem Öffnungsrand zum Kontern eines Schraubenkopfes (13) der Befestigungsschraube (4) und zur Durchführung eines Schafts (15) der Befestigungsschraube (4) aufweist.

17. Dentales Verankerungssystem nach Anspruch 16, **dadurch gekennzeichnet, dass** es von der zweiten Verankerungsart (200) auf die erste Verankerungsart (100) dadurch umrüstbar ist, dass das Trägerelement (3) von dem Verankerungselement (9) abgezogen, insbesondere das Innenteil (6) und/oder das Außenteil (7) entfernt, und dann das Trägerelement (3) mit seinem Lagerabschnitt (12) an dem Aufnahmeabschnitt (1) des Verankerungselements (9) aufgenommen und die Befestigungsschraube (4) in die Gewindebohrung (10) des Verankerungselements (9) eingeschraubt wird.

18. Dentales Verankerungssystem nach Anspruch 16 oder 17, **dadurch gekennzeichnet, dass** das Trägerelement (3) mit seiner Innenoberfläche (11) einen apikal offenen Hohlraum (5) ausbildet, welcher ausgebildet ist, dass eine Anordnung des Innenteils (6) und/oder des Außenteils (7) in dem Hohlraum (5) möglich ist, oder dass das Innenteil (5) und/oder das Außenteil (7) in dem Hohlraum (5) bereits von Anfang an angeordnet und dabei eine wenigstens teilweise Durchführung eines Schafts (15) der Befestigungschraube (4) durch den Hohlraum (5) hindurch möglich ist.

19. Dentales Verankerungssystem nach einem der Ansprüche 16 bis 18, **dadurch gekennzeichnet, dass** das Innenteil (6) oder das Außenteil (7) an einem koronalen Ende einer Schraube (18) ausgebildet ist, welche bei der zweiten Verankerungsart (200) anstelle der Befestigungsschraube (4) mit ihrem apikalen Ende in die Gewindebohrung (10) des Verankerungselements (9) einschraubbar ist.

20. Dentales Verankerungssystem nach einem der Ansprüche 16 bis 19, **dadurch gekennzeichnet, dass**
a) das Innenteil (6) und das Außenteil (7) separate Teile darstellen, welche an dem Trägerelement (3) und an dem Verankerungselement (9) befestigbar sind, oder dass
b) das Innenteil (6) an dem Verankerungselement (9) oder dem Trägerelement (3) oder das Außenteil (7) an dem Verankerungselement (9) oder dem Trägerelement (3) integral ausgebildet ist.

21. Dentales Verankerungssystem nach einem der Ansprüche 16 bis 20, **dadurch gekennzeichnet, dass** das Innenteil (6) eine äußere Kugelschicht- oder Kugelsegmentfläche (19) und das Außenteil (7) eine zur äußeren Kugelschicht- oder Kugelsegmentfläche (19) komplementäre innere Kugelschicht- oder Kugelsegmentfläche (20) aufweist, wobei die innere Kugelschicht- oder Kugelsegmentfläche (20) und die äußere Kugelschicht- oder Kugelsegmentfläche (19) einander kontaktieren.

## Claims

1. Dental anchoring system for anchoring a carrier element (3) onto an anchoring element (9), with at least the carrier element (3), the anchoring element (9), and a fastening screw (4), wherein
a) the anchoring element (9) has a receiving section (1) for receiving the carrier element (3) and a threaded bore (10), wherein
b) the carrier element (3) is configured for direct or indirect fastening to a dental structural element, in particular to a dental prosthesis, and forms a bearing portion (12) for bearing on the receiving section (1) of the anchoring element (9), wherein
c) the carrier element (3) can be fastened onto the anchoring element (9) in a first anchoring type (100) using the fastening screw (4) in such a way that the carrier element (3) is received with its bearing portion (12) on the receiving section (1) of the anchoring element (9) and the fastening screw (4) is screwed into the threaded bore (10) of the anchoring element (9), wherein
d) the carrier element (3) can also optionally be releasably fastened to the anchoring element (9) by means of a second anchoring type (200) without using the fastening screw (4), in that
e) a non-destructive, releasable and form-fitting connection is provided between an outer part (7) and an inner part (6), in which the inner part (6) can be locked into the outer part (7) in the manner of a push-button or snap-in connection with elastic deformation of the inner part (6) and/or the outer part (7), wherein
f) the inner part (6) is provided on the anchoring element (9) and the outer part (7) on the carrier element (3), and the outer part (7) is a separate part which can be fastened onto the carrier element (3), wherein
g) the carrier element (3) is received with its bearing portion (12) on the receiving section (1) of the anchoring element (9) with non-destructive positive locking of the inner part (6) in the outer part (7), thereby releasably holding the carrier element (3) on the anchoring element (9), wherein
h) for releasing the second anchoring type (200), the carrier element (3) can be removed from the anchoring element (9) by disengaging the inner part (6) from the outer part (7), wherein
i) the dental anchoring system can be converted from the second anchoring type (200) to the first anchoring type (100) by removing the carrier element (3) from the anchoring element (9) and then the carrier element (3) is received with its bearing portion (12) on the receiving section (1) of the anchoring element (9) and the fastening screw (4) is screwed into the threaded bore (10) of the anchoring element (9), and wherein
j) the dental anchoring system can be converted from the first anchoring type (200) to the second anchoring type (200) by loosening the fastening screw (4), the carrier element (3) is removed from the anchoring element (9) and then the inner part (6) is snapped into the outer part (7) without damage, and then the carrier element (3) is brought together with the anchoring element (9), and wherein
k) the outer part (7) is at least partially spherical and the inner part (6) is at least partially spherical in a complementary manner such that, when the inner part (6) is locked into the outer part (7), the outer part (7) and the inner part (6) can be pivoted relative to each other into a plurality of relative pivot positions (α, β).

2. Dental anchoring system according to claim 1, **characterized in that** the carrier element (3) forms with its inner surface (11) an apically open cavity (5), which is configured such that the inner part (6) and/or the outer part (7) can be arranged in the cavity (5), or such that the inner part (5) and/or the outer part (7) can be arranged in the cavity (5) from the outset, and thereby at least partial passage of a shaft (15) of the fastening screw (4) through the cavity (5) is possible.

3. Dental anchoring system according to any one of the preceding claims, **characterized in that** the inner part (6) is formed at a coronal end of a screw (18) which, in the second anchoring type (200), can be screwed with its apical end into the threaded bore (10) of the anchoring element (9) instead of the fastening screw (4).

4. Dental anchoring system according to claim 1 or 2, **characterized in that**
a) the inner part (6) is a separate part which can be fastened to the anchoring element (9), or **in that**
b) the inner part (6) is integrally formed on the anchoring element (9).

5. Dental anchoring system according to any one of the preceding claims, **characterized in that** the inner part (6) has an outer spherical layer or spherical segment surface (19) and the outer part (7) has an inner spherical layer or spherical segment surface (20) complementary to the outer spherical layer or spherical segment surface (19), wherein the inner spherical layer or spherical segment surface (20) and the outer spherical layer or spherical segment surface (19) are in contact with each other.

6. Dental anchoring system according to claim 5, **characterized in that** a defined relative pivot position (α₀, β₀) of the plurality of relative pivot positions (α, β) is provided, in which the direction of a center axis (23) of the outer part (7) or the direction of a center axis (24) of the inner part (6) corresponds to an assembly and/or disassembly direction of the carrier element (3) with respect to the anchoring element (9) and in which the carrier element (3) and the anchoring element (9) can be assembled and disassembled.

7. Dental anchoring system according to claim 6, **characterized in that** it comprises at least one alignment element (8) and the outer part (7) and/or the inner part (6) comprise an engagement section (22) for engaging the alignment element (8) such that, by engaging the at least one alignment element (8) with the engagement section (22) and subsequent movement of the at least one alignment element (8), the outer part (7) and the inner part (6) can be brought into the defined relative pivot position (α₀, β₀).

8. Dental anchoring system according to claim 6 or 7, **characterized in that** the outer part (7) and the inner part (6) together form a double joint such that
a) with the aid of a first joint of the double joint, relative pivoting of the outer part (7) and the inner part (6) about a first joint axis (32) in a first pivoting plane (26) is possible, and
b) with the aid of a second joint of the double joint, relative pivoting of the outer part (7) and the inner part (6) about a second joint axis (33) and in a second pivoting plane (26) is possible.

9. Dental anchoring system according to claim 8, **characterized in that** the first joint axis (32) is perpendicular to the second joint axis (33).

10. Dental anchoring system according to claim 8 or 9, **characterized in that** the outer part (7) has two cheeks (28a, 28b) projecting away parallel from a base body (27), each having inner spherical layer or spherical segment surfaces (20) which surround diametrically opposite outer spherical layer or spherical segment surfaces (19) on the inner part (6) in such a way that the first pivot plane (26) runs parallel to the two cheeks (28a, 28b) and the first joint axis runs perpendicular to the two cheeks (18a, 28b).

11. Dental anchoring system according to any one of claims 8 to 10, **characterized in that** the second joint axis (33) is coaxial with respect to the center axis (24) of the inner part (6) or with respect to a center axis of the anchoring element (9).

12. Dental anchoring system according to any one of claims 6 to 11, **characterized in that** in the defined relative pivot position (α₀, β₀)
a) the outer part (7) is fastened to the carrier element (3), and
b) the inner part (6) is fastened to the anchoring element (9).

13. Dental anchoring system according to any one of the preceding claims, **characterized in that** the carrier element (3) has a central through-opening (14) with an opening edge for countering a screw head (13) of the fastening screw (4) and for passing through a shaft (15) of the fastening screw (4).

14. Dental anchoring system according to any one of the preceding claims, **characterized in that** the receiving section (1) of the anchoring element (9) and the bearing portion (12) of the carrier element (3) are formed by complementary shaped conical surfaces.

15. Dental anchoring system according to any one of the preceding claims, **characterized in that** the anchoring element (9) comprises an implant and/or an abutment.

16. Dental anchoring system for anchoring a carrier element (3) onto an anchoring element (9), with at least the carrier element (3) and the anchoring element (9), wherein a) the anchoring element (9) has a receiving section (1) for receiving the carrier element (3) and a threaded bore (10),
b) the carrier element (3) is configured for direct or indirect fastening to a dental structural element, in particular to a dental prosthesis, and forms a bearing portion (12) for bearing on the receiving section (1) of the anchoring element (9),
c) the carrier element (3) can be fastened to the anchoring element (9) in a first anchoring type (100) using a fastening screw (4) in that the carrier element (3) can be received with its bearing portion (12) on the receiving section (1) of the anchoring element (9) and the fastening screw (4) can be screwed into the threaded bore (10) of the anchoring element (9), wherein
d) the carrier element (3) can also optionally be releasably fastened to the anchoring element (9) by means of a second anchoring type (200) without using the fastening screw (4), in that
e) a non-destructive, releasable and form-fitting connection is provided between an outer part (7) and an inner part (6), in which the inner part (6) can be locked into the outer part (7) in the manner of a push-button or snap-in connection with elastic deformation of the inner part (6) and/or the outer part (7), and
f1) the outer part (7) is provided on the anchoring element (9) and the inner part (6) is provided on the carrier element (3), or
f2) the inner part (6) is provided on the anchoring element (9) and the outer part (7) is provided on the carrier element (3), and
g) the carrier element (3) is received with its bearing portion (12) on the receiving section (1) of the anchoring element (9) with non-destructive positive locking of the inner part (6) in the outer part (7), thereby releasably holding the carrier element (3) on the anchoring element (9), wherein
h) for releasing the second anchoring type (200), the carrier element (3) can be removed from the anchoring element (9) by disengaging the inner part (6) from the outer part (7), wherein
i) the outer part (7) is at least partially spherical and the inner part (6) is at least partially spherical in a complementary manner such that, when the inner part (6) is locked into the outer part (7), the outer part (7) and the inner part (6) can be pivoted relative to each other into a plurality of relative pivot positions (α, β), and wherein
j) a defined relative pivot position (α₀, β₀) is provided for the plurality of relative pivot positions (α, β), in which the direction of a center axis (23) of the outer part (7) or the direction of a center axis (24) of the inner part (6) corresponds to an assembly and/or disassembly direction of the carrier element (3) with respect to the anchoring element (9) and in which the carrier element (3) and the anchoring element (9) can be assembled and disassembled, and wherein
k) the outer part (7) and the inner part (6) together form a double joint in such a way that, with the aid of a first joint of the double joint, relative pivoting of the outer part (7) and the inner part (6) about a first joint axis (32) in a first pivot plane (26) is possible with the aid of a first joint of the double joint, and a relative pivoting of the outer part (7) and the inner part (6) about a second joint axis (33) and in a second pivot plane (31) is possible with the aid of a second joint of the double joint, and wherein
l) the outer part (7) has two cheeks (28a, 28b) projecting away parallel from a base body (27), each having inner spherical layer or spherical segment surfaces (20) which surround diametrically opposite outer spherical layer or spherical segment surfaces (19) on the inner part (6) in such a way that the first pivot plane (26) runs parallel to the two cheeks (28a, 28b) and the first joint axis runs perpendicular to the two cheeks (18a, 28b), and wherein
m) the carrier element (3) has a central through-opening (14) with an opening edge for countering a screw head (13) of the fastening screw (4) and for passing through a shaft (15) of the fastening screw (4).

17. Dental anchoring system according to claim 16, **characterized in that** it can be converted from the second anchoring type (200) to the first anchoring type (100) by removing the carrier element (3) from the anchoring element (9), in particular by removing the inner part (6) and/or the outer part (7), and then the carrier element (3) is received with its bearing portion (12) on the receiving section (1) of the anchoring element (9) and the fastening screw (4) is screwed into the threaded bore (10) of the anchoring element (9).

18. Dental anchoring system according to claim 16 or 17, **characterized in that** the carrier element (3) forms with its inner surface (11) an apically open cavity (5), which is configured such that the inner part (6) and/or the outer part (7) can be arranged in the cavity (5), or such that the inner part (5) and/or the outer part (7) can be arranged in the cavity (5) from the outset, and thereby at least partial passage of a shaft (15) of the fastening screw (4) through the cavity (5) is possible.

19. Dental anchoring system according to any one of claims 16 to 18, **characterized in that** the inner part (6) or the outer part (7) is formed at a coronal end of a screw (18) which, in the second anchoring type (200), can be screwed with its apical end into the threaded bore (10) of the anchoring element (9) instead of the fastening screw (4).

20. Dental anchoring system according to any one of claims 16 to 19, **characterized in that**
a) the inner part (6) and the outer part (7) are separate parts which can be fastened to the carrier element (3) and to the anchoring element (9), or **in that**
b) the inner part (6) is integrally formed on the anchoring element (9) or the carrier element (3) or the outer part (7) is integrally formed on the anchoring element (9) or the carrier element (3).

21. Dental anchoring system according to any one of claims 16 to 20, **characterized in that** the inner part (6) has an outer spherical layer or spherical segment surface (19) and the outer part (7) has an inner spherical layer or spherical segment surface (20) complementary to the outer spherical layer or spherical segment surface (19), wherein the inner spherical layer or spherical segment surface (20) and the outer spherical layer or spherical segment surface (19) are in contact with each other.

## Revendications

1. Système d'ancrage dentaire destiné à ancrer un élément porteur (3) à un élément d'ancrage (9), avec au moins l'élément porteur (3), l'élément d'ancrage (9) et une vis de fixation (4), dans lequel
a) l'élément d'ancrage (9) présente une section de logement (1) destinée à loger l'élément porteur (3) et un perçage fileté (10), dans lequel
b) l'élément porteur (3) est conçu pour être fixé directement ou indirectement à un élément de construction dentaire, en particulier à une prothèse dentaire et forme une section d'appui (12) pour l'appui sur la section de logement (1) de l'élément d'ancrage (9), dans lequel
c) l'élément porteur (3) peut être fixé à l'élément d'ancrage (9) dans un premier type d'ancrage (100) en utilisant la vis de fixation (4) de sorte que l'élément porteur (3) est logé avec sa section d'appui (12) sur la section de logement (1) de l'élément d'ancrage (9), et la vis de fixation (4) est vissée dans le perçage fileté (10) de l'élément d'ancrage (9), dans lequel
d) l'élément porteur (3) peut, au choix, également être fixé de manière amovible à l'élément d'ancrage (9) au moyen d'un second type d'ancrage (200) sans utiliser la vis de fixation (4), de sorte que
e) une liaison amovible non destructive et par complémentarité de formes est prévue entre une partie extérieure (7) et une partie intérieure (6), dans laquelle la partie intérieure (6) peut s'encliqueter dans la partie extérieure (7) à la manière d'une liaison à bouton-pression ou à enclenchement sous déformation élastique de la partie intérieure (6) et/ou de la partie extérieure (7), dans lequel
f) la partie intérieure (6) est prévue sur l'élément d'ancrage (9) et la partie extérieure (7) sur l'élément porteur (3), et la partie extérieure (7) représente une partie séparée qui peut être fixée à l'élément porteur (3), dans lequel
g) l'élément porteur (3) est logé avec sa section d'appui (12) sur la section de logement (1) de l'élément d'ancrage (9) par encliquetage non destructif, par complémentarité de formes de la partie intérieure (6) dans la partie extérieure (7) et l'élément porteur (3) est ainsi maintenu de manière amovible sur l'élément d'ancrage (9), dans lequel
h) pour desserrer le second type d'ancrage (200), l'élément porteur (3) peut être retiré de l'élément d'ancrage (9) en désencliquetant la partie intérieure (6) de la partie extérieure (7), dans lequel
i) le système d'ancrage dentaire peut être converti du second type d'ancrage (200) au premier type d'ancrage (100) en retirant l'élément porteur (3) de l'élément d'ancrage (9), puis l'élément porteur (3) est logé avec sa section d'appui (12) sur la section de logement (1) de l'élément d'ancrage (9), et la vis de fixation (4) est vissée dans le perçage fileté (10) de l'élément d'ancrage (9), et dans lequel
j) le système d'ancrage dentaire peut ainsi être converti du premier type d'ancrage (200) au second type d'ancrage (200) en desserrant la vis de fixation (4), en retirant l'élément porteur (3) de l'élément d'ancrage (9), puis en encliquetant la partie intérieure (6) dans la partie extérieure (7) de manière non destructive, puis en assemblant l'élément porteur (3) avec l'élément d'ancrage (9), et dans lequel
k) la partie extérieure (7) est au moins partiellement sphérique et la partie intérieure (6) est au moins partiellement sphérique de manière complémentaire, de sorte que lorsque la partie intérieure (6) est encliquetée dans la partie extérieure (7), la partie extérieure (7) et la partie intérieure (6) peuvent pivoter seules l'une par rapport à l'autre dans une pluralité de positions de pivotement relatives (α, β).

2. Système d'ancrage dentaire selon la revendication 1, **caractérisé en ce que** l'élément porteur (3) forme avec sa surface intérieure (11) une cavité (5) ouverte apicalement qui est conçue de manière à ce qu'un agencement de la partie intérieure (6) et/ou de la partie extérieure (7) dans la cavité (5) soit possible, ou à ce que la partie intérieure (5) et/ou la partie extérieure (7) soient déjà disposées dès le départ dans la cavité (5) et le passage au moins partiel d'une tige (15) de la vis de fixation (4) est possible à travers la cavité (5).

3. Système d'ancrage dentaire selon l'une quelconque des revendications précédentes, **caractérisé en ce que** la partie intérieure (6) est formée à une extrémité coronaire d'une vis (18), qui, dans le second type d'ancrage (200), peut être vissée avec son extrémité apicale dans le perçage fileté (10) de l'élément d'ancrage (9) à la place de la vis de fixation (4).

4. Système d'ancrage dentaire selon la revendication 1 ou 2, **caractérisé en ce que**
a) la partie intérieure (6) représente une partie séparée qui peut être fixée à l'élément d'ancrage (9), ou **en ce que**
b) la partie intérieure (6) est formée d'un seul tenant sur l'élément d'ancrage (9).

5. Système d'ancrage dentaire selon l'une quelconque des revendications précédentes, **caractérisé en ce que** la partie intérieure (6) présente une surface extérieure à couche sphérique ou segment sphérique (19) et la partie extérieure (7) présente une surface intérieure à couche sphérique ou segment sphérique (20) complémentaire à la surface extérieure à couche sphérique ou segment sphérique (19), dans lequel la surface intérieure à couche sphérique ou segment sphérique (20) et la surface extérieure à couche sphérique ou segment sphérique (19) sont en contact l'une avec l'autre.

6. Système d'ancrage dentaire selon la revendication 5, **caractérisé en ce qu'**une position de pivotement relative définie (α0, β0) de la pluralité de positions de pivotement relatives (α, β) est prévue, dans laquelle la direction d'un axe central (23) de la partie extérieure (7) ou la direction d'un axe central (24) de la partie intérieure (6) correspond à une direction de montage et/ou de démontage de l'élément porteur (3) par rapport à l'élément d'ancrage (9) et dans laquelle l'élément porteur (3) et l'élément d'ancrage (9) peuvent être montés et démontés.

7. Système d'ancrage dentaire selon la revendication 6, **caractérisé en ce qu'il** comprend au moins un élément d'alignement (8) et la partie extérieure (7) et/ou la partie intérieure (6) comprend une section d'engagement (22) pour l'engagement de l'élément d'alignement (8) de sorte que, par un engagement de l'au moins un élément d'alignement (8) sur la partie d'engagement (22) et par un déplacement ultérieur de l'au moins un élément d'alignement (8), la partie extérieure (7) et la partie intérieure (6) peuvent être amenées dans la position de pivotement relative définie (α₀, β₀).

8. Système d'ancrage dentaire selon la revendication 6 ou 7, **caractérisé en ce que** la partie extérieure (7) et la partie intérieure (6) forment ensemble une double articulation, de sorte que
a) à l'aide d'une première articulation de la double articulation, un pivotement relatif de la partie extérieure (7) et de la partie intérieure (6) autour d'un premier axe d'articulation (32) dans un premier plan de pivotement (26) est possible, et
b) à l'aide d'une seconde articulation de la double articulation, un pivotement relatif de la partie extérieure (7) et de la partie intérieure (6) autour d'un second axe d'articulation (33) et dans un second plan de pivotement (26) est possible.

9. Système d'ancrage dentaire selon la revendication 8, **caractérisé en ce que** le premier axe d'articulation (32) est perpendiculaire au second axe d'articulation (33).

10. Système d'ancrage dentaire selon la revendication 8 ou 9, **caractérisé en ce que** la partie extérieure (7) présente deux joues (28a, 28b) faisant saillie parallèlement d'un corps de base (27), avec respectivement des surfaces intérieures à couche sphérique ou segment sphérique (20) qui entourent par contact des surfaces extérieures à couche sphérique ou segment sphérique (19) diamétralement opposées sur la partie intérieure (6) de sorte que le premier plan de pivotement (26) s'étende parallèlement aux deux joues (28a, 28b) et que le premier axe d'articulation s'étende perpendiculairement aux deux joues (18a, 28b).

11. Système d'ancrage dentaire selon l'une quelconque des revendications 8 à 10, **caractérisé en ce que** le second axe d'articulation (33) est coaxial par rapport à l'axe central (24) de la partie intérieure (6) ou par rapport à un axe central de l'élément d'ancrage (9).

12. Système d'ancrage dentaire selon l'une quelconque des revendications 6 à 11, **caractérisé en ce que**, dans la position de pivotement relative définie (α₀, β₀)
a) la partie extérieure (7) est fixée à l'élément porteur (3), et
b) la partie intérieure (6) est fixée à l'élément d'ancrage (9).

13. Système d'ancrage dentaire selon l'une quelconque des revendications précédentes, **caractérisé en ce que** l'élément porteur (3) présente une ouverture traversante centrale (14) avec un bord d'ouverture pour contrer une tête de vis (13) de la vis de fixation (4) et pour faire passer une tige (15) de la vis de fixation (4).

14. Système d'ancrage dentaire selon l'une quelconque des revendications précédentes, **caractérisé en ce que** la section de logement (1) de l'élément d'ancrage (9) et la partie d'appui (12) de l'élément porteur (3) sont formées par des surfaces de forme conique complémentaires.

15. Système d'ancrage dentaire selon l'une quelconque des revendications précédentes, **caractérisé en ce que** l'élément d'ancrage (9) comprend un implant et/ou un aboutement.

16. Système d'ancrage dentaire destiné à ancrer un élément porteur (3) à un élément d'ancrage (9), avec au moins l'élément porteur (3) et l'élément d'ancrage (9), dans lequel
a) l'élément d'ancrage (9) présente une section de logement (1) destinée à loger l'élément porteur (3) et un perçage fileté (10),
b) l'élément porteur (3) est conçu pour être fixé directement ou indirectement à un élément de construction dentaire, en particulier à une prothèse dentaire et forme une section d'appui (12) pour l'appui sur la section de logement (1) de l'élément d'ancrage (9),
c) l'élément porteur (3) peut être fixé à l'élément d'ancrage (9) dans un premier type d'ancrage (100) en utilisant une vis de fixation (4) de sorte que l'élément porteur (3) est logé avec sa section d'appui (12) sur la section de logement (1) de l'élément d'ancrage (9), et la vis de fixation (4) peut être vissée dans le perçage fileté (10) de l'élément d'ancrage (9), dans lequel
d) l'élément porteur (3) peut, au choix, également être fixé de manière amovible à l'élément d'ancrage (9) au moyen d'un second type d'ancrage (200) sans utiliser la vis de fixation (4), de sorte que
e) une liaison amovible non destructive et par complémentarité de formes est prévue entre une partie extérieure (7) et une partie intérieure (6), dans laquelle la partie intérieure (6) peut s'encliqueter dans la partie extérieure (7) à la manière d'une liaison à bouton-pression ou à enclenchement sous déformation élastique de la partie intérieure (6) et/ou de la partie extérieure (7),
f1) la partie extérieure (7) est prévue sur l'élément d'ancrage (9) et la partie intérieure (6) sur l'élément porteur (3), ou
f2) la partie intérieure (6) est prévue sur l'élément d'ancrage (9) et la partie extérieure (7) sur l'élément porteur (3), et
g) l'élément porteur (3) est logé avec sa section d'appui (12) sur la section de logement (1) de l'élément d'ancrage (9) par encliquetage non destructif, par complémentarité de formes de la partie intérieure (6) dans la partie extérieure (7) et l'élément porteur (3) est ainsi maintenu de manière amovible sur l'élément d'ancrage (9), dans lequel
h) pour desserrer le second type d'ancrage (200), l'élément porteur (3) peut être retiré de l'élément d'ancrage (9) en désencliquetant la partie intérieure (6) de la partie extérieure (7), dans lequel
i) la partie extérieure (7) est au moins partiellement sphérique et la partie intérieure (6) est au moins partiellement sphérique de manière complémentaire, de sorte que lorsque la partie intérieure (6) est encliquetée dans la partie extérieure (7), la partie extérieure (7) et la partie intérieure (6) peuvent pivoter seules l'une par rapport à l'autre dans une pluralité de positions de pivotement relatives (α, β), et dans lequel
j) une position de pivotement relative définie (α₀, β₀) de la pluralité de positions de pivotement relatives (α, β) est prévue, dans laquelle la direction d'un axe central (23) de la partie extérieure (7) ou la direction d'un axe central (24) de la partie intérieure (6) correspond à une direction de montage et/ou de démontage de l'élément porteur (3) par rapport à l'élément d'ancrage (9) et dans laquelle l'élément porteur (3) et l'élément d'ancrage (9) peuvent être montés et démontés, et dans lequel
k) la partie extérieure (7) et la partie intérieure (6) forment ensemble une double articulation de sorte qu'à l'aide d'une première articulation de la double articulation, un pivotement relatif de la partie extérieure (7) et de la partie intérieure (6) autour d'un premier axe d'articulation (32) dans un premier plan de pivotement (26) est possible et un pivotement relatif de la partie extérieure (7) et de la partie intérieure (6) autour d'un second axe d'articulation (33) et dans un second plan de pivotement (31) est possible à l'aide d'une second articulation de la double articulation, dans lequel
l) la partie extérieure (7) présente deux joues (28a, 28b) faisant saillie parallèlement d'un corps de base (27), avec respectivement des surfaces intérieures à couche sphérique ou segment sphérique (20) qui entourent par contact des surfaces extérieures à couche sphérique ou segment sphérique (19) diamétralement opposées sur la partie intérieure (6) de sorte que le premier plan de pivotement (26) s'étende parallèlement aux deux joues (28a, 28b) et que le premier axe d'articulation s'étende perpendiculairement aux deux joues (18a, 28b), et dans lequel
m) l'élément porteur (3) présente une ouverture traversante centrale (14) avec un bord d'ouverture pour contrer une tête de vis (13) de la vis de fixation (4) et pour faire passer une tige (15) de la vis de fixation (4).

17. Système d'ancrage dentaire selon la revendication 16, **caractérisé en ce qu'**il peut être converti du second type d'ancrage (200) au premier type d'ancrage (100) en retirant l'élément porteur (3) de l'élément d'ancrage (9), en particulier en retirant la partie intérieure (6) et/ou la partie extérieure (7), puis l'élément porteur (3) est logé avec sa section d'appui (12) sur la section de logement (1) de l'élément d'ancrage (9) et la vis de fixation (4) est vissée dans le perçage fileté (10) de l'élément d'ancrage (9).

18. Système d'ancrage dentaire selon la revendication 16 ou 17, **caractérisé en ce que** l'élément porteur (3) forme avec sa surface intérieure (11) une cavité (5) ouverte apicalement qui est conçue de manière à ce qu'un agencement de la partie intérieure (6) et/ou de la partie extérieure (7) dans la cavité (5) soit possible, ou à ce que la partie intérieure (5) et/ou la partie extérieure (7) soient déjà disposées dès le départ dans la cavité (5) et le passage au moins partiel d'une tige (15) de la vis de fixation (4) est possible à travers la cavité (5).

19. Système d'ancrage dentaire selon l'une quelconque des revendications 16 à 18, **caractérisé en ce que** la partie intérieure (6) ou la partie extérieure (7) est formée à une extrémité coronaire d'une vis (18), qui, dans le second type d'ancrage (200), peut être vissée avec son extrémité apicale dans le perçage fileté (10) de l'élément d'ancrage (9) à la place de la vis de fixation (4).

20. Système d'ancrage dentaire selon l'une quelconque des revendications 16 à 19, **caractérisé en ce que**
a) la partie intérieure (6) et la partie extérieure (7) représentent des parties séparées qui peuvent être fixées à l'élément porteur (3) et à l'élément d'ancrage (9), ou **en ce que**
b) la partie intérieure (6) est formée d'un seul tenant sur l'élément d'ancrage (9) ou l'élément porteur (3) ou la partie extérieure (7) est formée d'un seul tenant sur l'élément d'ancrage (9) ou l'élément porteur (3).

21. Système d'ancrage dentaire selon l'une quelconque des revendications 16 à 20, **caractérisé en ce que** la partie intérieure (6) présente une surface extérieure à couche sphérique ou segment sphérique (19) et la partie extérieure (7) présente une surface intérieure à couche sphérique ou segment sphérique (20) complémentaire à la surface extérieure à couche sphérique ou segment sphérique (19), dans lequel la surface intérieure à couche sphérique ou segment sphérique (20) et la surface extérieure à couche sphérique ou segment sphérique (19) sont en contact l'une avec l'autre.
